# EUROPÄISCHE PATENTSCHRIFT

(11) **EP 3 452 347 B1**
(45) Veröffentlichungstag und Bekanntmachung des Hinweises auf die Patenterteilung: **09.02.2022**
(21) Anmeldenummer: 17711086.3
(22) Anmeldetag: 13.03.2017
(51) Int. Cl.: B60T 17/22, B60T 13/68

(54) **VERFAHREN ZUM AUTOMATISIERTEN ELEKTRONISCHEN STEUERN EINES BREMSSYSTEMS SOWIE ELEKTRONISCH STEUERBARES BREMSSYSTEM IN EINEM NUTZFAHRZEUG**
METHOD FOR THE AUTOMATED ELECTRONIC CONTROL OF A BRAKING SYSTEM AND ELECTRONICALLY CONTROLLABLE BRAKING SYSTEM IN A UTILITY VEHICLE
PROCÉDÉ DE COMMANDE ÉLECTRONIQUE AUTOMATISÉE D'UN SYSTÈME DE FREINAGE AINSI QUE SYSTÈME DE FREINAGE POUVANT ÊTRE COMMANDÉ ÉLECTRONIQUEMENT DANS UN VÉHICULE UTILITAIRE

(30) Priorität: 02.05.2016 DE 102016005317
(43) Veröffentlichungstag der Anmeldung: 13.03.2019
(73) Patentinhaber: ZF CV Systems Europe BV, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2017/000325
(87) Internationale Veröffentlichungsnummer: WO 2017/190819

(56) Entgegenhaltungen:
- EP-A1- 2 942 249
- DE-A1- 19 943 960
- DE-A1-102013 213 171

## Beschreibung

Die Erfindung betrifft ein Verfahren zum automatisierten, elektronischen Steuern eines Bremssystems sowie ein elektronisch steuerbares Bremssystem in einem Nutzfahrzeug, insbesondere in einem automatisiert steuerbaren Nutzfahrzeug.

In Fahrzeugen, insbesondere Nutzfahrzeugen, mit einem pneumatischen Bremssystem, insbesondere ausgebildet als elektronisches Betriebsbremssystem (EBS), können zum Aussteuern von Bremsdrücken von einer Steuereinrichtung (ECU) elektronisch Steuerventile, beispielsweise Relaisventile oder Achsmodulatoren, angesteuert werden, die dann in Abhängigkeit einer angeforderten Fahrzeug-Soll-Beschleunigung pneumatisch einen Bremsdruck an die Bremszylinder von Betriebsbremsen des Bremssystems aussteuern. Dem elektronisch ausgesteuerten pneumatischen Bremsdruck überlagert ist die Aussteuerung eines Bremsdruckes in Abhängigkeit einer Betätigung eines Bremskraftreglers bzw. Bremswertgebers über ein Bremspedal durch den Fahrer, so dass der Fahrer in einem automatisiert gesteuerten Fahrzeug im Notfall auch selbst noch eine Notbremsung vollziehen kann und/oder den elektronisch ausgesteuerten Bremsdruck übersteuern kann.

Nachteilig bei bisherigen Lösungen in bekannten Fahrzeugen, insbesondere automatisiert gesteuerten Nutzfahrzeugen, mit pneumatischen Bremssystemen ist, dass bei einem Ausfall der elektronischen Ansteuerung der Steuerventile keine elektronisch steuerbare Rückfallebene vorhanden ist. Die pneumatische Rückfallebene eines herkömmlichen Bremssystems funktioniert nur dann, wenn der Fahrer auch das Bremspedal betätigt. Ein weiteres sekundäres Bremssystem im Fahrzeug, beispielsweise ein Parkbremssystem, wird ebenfalls lediglich dann aktiv, wenn der Fahrer eingreift, um das Fahrzeug darüber abzubremsen. Dies ist aber bei einem automatisiert gesteuerten Fahrzeug in der Regel nicht der Fall, insbesondere wenn kein Fahrer im Fahrzeug bzw. am Fahrerplatz sitzt oder der Fahrer unaufmerksam oder mit anderen Dingen beschäftigt ist.

Die DE 197 50 392 A1 zeigt eine Bremssteuerung für eine Hinterachse mit einem Relaisventil als Steuerventil, einem elektronisch gesteuerten Proportionalitätsventil und einem pneumatischen Bremskraftregler. Das Proportionalitätsventil und der Bremskraftregler sind über pneumatische Steuereingänge an das Relaisventil angeschlossen und übertragen einen bestimmten Steuerdruck an den Steuereingang des Relaisventils. Das Relaisventil wiederum steuert den höheren der beiden Steuerdrücke proportional als Bremsdruck an die Bremszylinder der Betriebsbremsen der Hinterachse aus. Weiterhin ist ein Bremsventil vorgesehen, dessen Stellung abhängig von der Bremspedalbetätigung durch den Fahrer ist und das den vom Relaisventil auszusteuernden Bremsdruck vorgibt. Dazu wird vom Bremsventil ein Bremsventil-Steuerdruck pneumatisch auf den Bremskraftregler und gleichzeitig über eine Steuerelektronik elektronisch über ein Steuersignal auf das Proportionalitätsventil übertragen, die dann einen entsprechenden Steuerdruck an das Relaisventil aussteuern, wobei bei ordnungsgemäßer Funktionsweise der Steuerdruck des Bremskraftreglers geringfügig niedriger eingestellt wird als der Steuerdruck des elektronisch gesteuerten Proportionalitätsventils. Bei einem elektronischen Ausfall wird dadurch eine Rückfallebene ausgebildet, denn wenn das elektronisch gesteuerte Proportionalitätsventil ausfällt oder eine Störung aufweist, ist der vom Bremskraftregler vorgegebene Steuerdruck automatisch höher und wird somit zur Bremsdruck-Aussteuerung durch das Relaisventil verwendet.

Die DE 28 18 813 C3 beschreibt eine Anordnung zum Verhindern des Durchdrehens der Räder. Hierbei wird bei Aktivierung der Anordnung ein Magnetventil geöffnet, das den Arbeitsdruck aus einem Druckvorratsbehälter freigibt, so dass dieser über ein Wegeventil an die Magnetregelventile an den Hinterrädern ausgesteuert werden kann. Das Magnetventil wird hierbei von einer Vergleichseinrichtung derartig angesteuert, dass bei einem Durchdrehen der Hinterräder beim Anfahren die Hinterräder über die Magnetregelventile abgebremst werden und dadurch die Geschwindigkeit der Hinterräder an die Geschwindigkeit der Vorderräder angepasst wird. Wird gleichzeitig ein Bremsvorgang eingeleitet, wird das Wegeventil derartig umgeschaltet, dass Bremsdruck nur noch vom Bremsventil an die Magnetregelventile geleitet wird und darüber eine Abbremsung der Räder erfolgt.

Die DE 10 2014 013 882 zeigt ein Verfahren zum Erfassen einer unbeabsichtigten pneumatischen Aktivierung eines Relaisventils, wobei das Relaisventil zum Betätigen der Betriebsbremsen vorgesehen ist und sowohl Anforderungen von einem Bremsventil als auch Anforderungen von einer Steuerung bzw. Regelung zum automatischen Bremsen entgegennimmt.

Die US 7 520 572 B2 und die EP 1 730 006 B1 zeigen ein Verfahren, bei dem das Bremsventil zusätzlich zum Bremspedal von einer elektronischen Steuereinrichtung betätigt werden kann. Demnach ist ein elektronisches Bremssystem vorgesehen, dessen Betriebsbremsen durch das Bremsventil und über ein zusätzliches Relaisventil angesteuert werden. Die Bremsanforderung kann zum einen über das Bremspedal auf das Bremsventil vorgegeben werden oder aber unabhängig davon über einen Bremsventilaktuator, der zwischen dem Bremspedal und dem Bremsventil angeordnet ist. Der Bremsventilaktuator wird durch die elektronische Steuereinrichtung gesteuert, indem bei Vorliegen eines Steuersignals zum Abbremsen des Fahrzeuges ein Regeldruck an den Bremsventilaktuator ausgesteuert wird, der beispielsweise als ein pneumatisches Ventil ausgeführt ist, so dass das Bremsventil betätigt wird.

Die US 6 659 244 B2 zeigt einen möglichen Bremsventilaktuator für die US 7 520 572 B2 oder die EP 1 730 006 B1, der zwischen dem Bremspedal und dem Bremsventil angeordnet ist und als ein pneumatischer Aktuator mit einem Kolben ausgeführt ist. Bei Vorliegen eines Regeldrucks von der elektronischen Steuereinrichtung hält der pneumatische Aktuator die Kolbenstange des Bremsventils in ihrer betätigten Stellung, unabhängig von der Stellung des Bremspedals, um beispielsweise eine Pre-Trip Funktionalität im Stillstand des Fahrzeuges ausbilden zu können.

Die EP 1 530 529 B1 zeigt ein Druckregelmodul für eine DruckluftBremsanlage eines Fahrzeuges. Hierbei ist vorgesehen, dass über ein Wegeventil ein die Betriebsbremse steuerndes Relaisventil angesteuert wird, wobei die Ansteuerung in Abhängigkeit eines Schlupffalls von einer ABS-Steuereinrichtung stattfindet. Weiterhin ist vorgesehen, eine derartige Anordnung in einem Antriebsschlupfsystem einzusetzen, indem ein weiteres Wegeventil vorgeschaltet wird, das je nach Vorliegen eines Antriebsschlupffalls den Druckluftanschluss des Wegeventils mit einem Druckvorratsbehälter verbindet, so dass der Druck an den Betriebsbremsen über das Relaisventil auch erhöht werden kann.

Die DE 10 2010 050 578 A1 zeigt eine Bremsanlage, bei der über ein Bremsventil bzw. eine Bremspedaleinrichtung eine Bremsanforderung vorgegeben wird. Diese wird in einer Steuereinrichtung in ein elektronisches Signal umgewandelt und mit dem elektronischen Signal ein Steuerventil angesteuert, das den Bremsdruck an die Betriebsbremsen aussteuert. Fällt die Elektronik aus, wird im Redundanzfall das Steuerventil pneumatisch über Druckluftleitungen vom Betriebsbremsventil angesteuert und darüber ein Bremsdruck an die Betriebsbremsen ausgesteuert. Das Steuerventil weist hierbei mehrere Magnetventile sowie ein Relaisventil auf. Die Magnetventile können je nach gewünschter Funktion über den Steuerdruck den vom Relaisventil ausgesteuerten Bremsdruck an den Betriebsbremsen erhöhen, halten oder verringern, indem das jeweilige Magnetventil bestromt wird.

Die DE 10 2013 015 949 A1 beschreibt ein Bremssystem zur Kurvenunterstützung, wobei vorgesehen ist, mit einem elektronisch gesteuerten Mehrwegeventil einen Bremsdruck an Betriebsbremsen des Bremssystems auszusteuern, wobei ein Bremsdruck auch dann ausgesteuert wird, wenn von einem ersten Bremsventil als Bremswertgeber keine Bremsanforderung vorliegt. Das Mehrwegeventil und das erste Bremsventil sind hierbei über ein Wechselventil auf ein Relaisventil geschaltet, das den Bremsdruck an die Betriebsbremsen aussteuert. Das Wechselventil gibt hierbei lediglich den höheren der beiden Drücke vom ersten Bremsventil oder dem Wechselventil an das Relaisventil, so dass die elektronische Anforderung des Mehrwegeventils durch das erste Bremsventil übersteuert werden kann.

Die DE 10 2014 006 615 A1 beschreibt ein pneumatisches Bremssystem mit einer Betriebsbremseinrichtung, die einen Bremswertgeber aufweist zum elektronischen Ausgeben einer Bremsanforderung beispielsweise in Abhängigkeit einer Bremspedalbetätigung. Weiterhin ist eine Parkbremseinrichtung vorgesehen, die insbesondere die Betriebsbremsen der Hinterachse betätigen kann. Der Bremswertgeber der Betriebsbremseinrichtung ist über eine Datenleitung mit der Parkbremseinrichtung verbunden, so dass im Falle eines elektronischen Defekts in der Betriebsbremseinrichtung eine vom Fahrer angeforderte Bremsung auch über die Parkbremseinrichtung an der Hinterachse erfolgen kann. Dadurch wird eine Redundanz ausgebildet.

Die DE 10 2013 213 171 A1 offenbart ein Verfahren und eine Vorrichtung zum Betreiben eines Kraftfahrzeugs in einem automatisierten Fahrbetrieb, bei dem eine Standardtrajektorie ermittelt wird, die eine Fahrzeugführung gemäß der vom Fahrer vorgegebenen Zieleinstellung und der momentanen Umfeldsituation umsetzt, eine Ermittlung einer Sicherheitstrajektorie erfolgt, die ein sicheres Anhalten des Fahrzeugs im Falle eines Notfalls in Abhängigkeit der momentanen Fahrzeugumfeldsituation umsetzt, bei der die Standardtrajektorie an eine erste Regelungseinrichtung und die Sicherheitstrajektorie an eine zweite Regelungseinrichtung weitergegeben werden und im Standardbetrieb die Aktoreinrichtungen zur Fahrzeugführung durch die erste Regelungseinrichtung angesteuert werden und im Sicherheitsfall, wenn der automatisierte Fahrbetrieb nicht sichergestellt werden kann, die Aktoreinrichtungen durch die zweite Regelungseinrichtung angesteuert werden,um das Fahrzeug ohne Gefährdung anzuhalten.

Es ist Aufgabe der Erfindung, ein Verfahren zum automatisierten, elektronischen Regeln eines Bremssystems sowie eine elektronisch geregelte Ansteuerung für ein Bremssystem bereitzustellen, die mit wenig Aufwand eine sichere und zuverlässige redundante Bremsung insbesondere in einem automatisiert steuerbaren Fahrzeug gewährleisten.

Diese Aufgabe wird durch ein Verfahren nach Anspruch 1 sowie ein elektronisch steuerbares Bremssystem nach Anspruch 22 gelöst. Bevorzugte Weiterbildungen sind in den Unteransprüchen angegeben.

Erfindungsgemäß ist demnach vorgesehen, in einem elektronisch steuerbaren Bremssystem, mit einer elektronisch und/oder pneumatisch steuerbaren Redundanz, die durch eine Redundanzanordnung ermöglicht wird, eine Überwachungseinrichtung bereitzustellen, die ausgebildet ist, ein für einen automatisierten Betrieb eines Fahrzeuges, insbesondere Nutzfahrzeuges, vorgegebenes Anforderungs-Signal, das automatisiert vorgegebene Anforderungen an Aktuatoren des Fahrzeuges, beispielsweise eine Fahrzeug-Soll-Beschleunigung, eine Fahrzeug-Soll-Geschwindigkeit und/oder eine Fahrzeug-Soll-Richtung, überträgt, zu plausibilisieren. Folgt aus der Plausibilisierung, dass mindestens eine der automatisiert vorgegebenen Anforderungen nicht vollständig oder fehlerfrei umgesetzt wird oder nicht vollständig oder fehlerfrei umgesetzt werden kann, d.h. ein aktuell vorliegender Ist-Zustand bezüglich der Längsdynamik des eigenen Fahrzeuges von einem aufgrund der automatisiert vorgegebenen Anforderungen folgenden Soll-Zustand unter Berücksichtigung einer Toleranz abweicht, wird von der Überwachungseinrichtung erfindungsgemäß ein Korrektur-Signal, das beispielsweise eine Korrektur-Verzögerung und/oder eine Korrektur-Geschwindigkeit übermittelt, an eine Steuerung der Redundanzanordnung übergeben, so dass diese daraufhin eine dem Korrektur-Signal entsprechende beispielsweise elektronisch-pneumatisch gesteuerte redundante Bremsung anfordern kann.

Dadurch kann bereits der Vorteil erreicht werden, dass in einem automatisiert gesteuerten Fahrzeug ein redundanter bzw. korrigierender Bremseingriff über die Redundanzanordnung unter Berücksichtigung einer plausibilisierten Anforderung erfolgen kann. Dadurch kann die Zuverlässigkeit der automatisierten Ansteuerung des Fahrzeuges erhöht werden, da aufgrund der Plausibilisierung eine fehlerhafte Umsetzung einer automatisiert vorgegebenen Anforderung erkannt und infolge dessen über eine redundante Bremsung reagiert werden kann, indem das Fahrzeug beispielsweise in den Stillstand überführt wird oder aber auf eine sichere Geschwindigkeit abgebremst wird, mit der das Fahrzeug an eine sichere Position befördert werden kann. Somit bewirkt der erfindungsgemäße korrigierende Bremseingriff, dass das Fahrzeug in einen sicheren Zustand überführt wird oder werden kann.

Durch die bei der Plausibilisierung einbezogene Toleranz wird beispielsweise berücksichtigt, dass bei der Bestimmung des aktuell vorliegenden Ist-Zustandes bezüglich der Längsdynamik des eigenen Fahrzeuges ein Messrauschen, Regelabweichungen, ein Antriebs- oder Bremsschlupf ohne Durchdrehen oder Blockieren der Räder oder andere das Fahrverhalten in sicherheitsunkritischer Weise beeinflussende Größen miterfasst werden, die durch das Anforderungs-Signal nicht vorgegeben werden und somit zu einer geringen Abweichung führen können.

Das Bremssystem weist dazu insbesondere eine erste Steuereinrichtung zum Bewirken einer Bremsung im automatisierten Normalbetrieb, d.h. außerhalb des Redundanzfalles, sowie eine die Redundanzanordnung steuernde zweite Steuereinrichtung, über die insbesondere im Redundanzfall eine Bremsung bewirkt werden kann, auf. Weiterhin ist im Fahrzeug eine dritte Steuereinrichtung vorgesehen, die einem gesteuerten elektronischen Regelsystem zugeordnet ist, das ausgebildet ist, das Fahrzeug über das Anforderungs-Signal automatisiert zu steuern. Die automatisierte Steuerung findet hierbei insbesondere in Abhängigkeit einer auf der dritten Steuereinrichtung geplanten Fahrzeugbewegung insbesondere unter Berücksichtigung des aktuellen Fahrzeugzustandes sowie einer Umgebungserfassung statt, wobei zur automatisierten Ansteuerung mit dem Anforderungs-Signal verschiedene Aktuatoren, beispielsweise die Radbremsen im Bremssystem, eine Dauerbremse (Retarder), ein Motor, ein Getriebe oder eine Lenkung angesteuert werden können, um in entsprechender Weise die geplante Fahrzeugbewegung umzusetzen.

Es können auch weitere Aktuatoren im Fahrzeug vorgesehen sein, die automatisiert angesteuert werden können, um die Dynamik des Fahrzeuges zu verändern und somit die Fahrzeugbewegung umzusetzen. Erfindungsgemäß ist hierbei vorgesehen, zumindest diejenigen Anforderung an die Aktuatoren zu überwachen bzw. zu plausibilisieren, die dazu dienen, den Ist-Zustand des Fahrzeuges bezüglich der Längsdynamik, im Folgenden Fahrzeug-Ist-Längsdynamik genannt, zu beeinflussen oder mitzubestimmen.

Vorzugsweise ist hierbei vorgesehen, bei der Plausibilisierung der Anforderungen insbesondere diejenigen längsdynamischen Anforderungen zu berücksichtigen, die eine positive Fahrzeug-Ist-Beschleunigung bewirken und/oder eine Fahrzeug-Ist-Richtung einstellen. D.h. es wird insbesondere plausibilisiert, ob das Getriebe und der Motor fehlerfrei angesteuert und die automatisiert vorgegebene Anforderungen durch diese Aktuatoren richtig umgesetzt werden. Dadurch kann vorteilhafterweise erreicht werden, dass auf einen Fehler im Antriebssystem, mit dem das Fahrzeug automatisiert vorwärts oder rückwärts bewegt werden kann, reagiert werden kann. Die Zuverlässigkeit der automatisierten Ansteuerung des Antriebs des Fahrzeuges steigt.

Es kann aber ergänzend auch vorgesehen sein, die eine Bremsung bewirkenden Anforderungen, d.h. diejenigen Anforderungen zum Bewirken einer negativen Fahrzeug-Ist-Beschleunigung, beispielsweise Anforderungen an das Bremssystem oder eines sekundären Bremssystems, zu berücksichtigen.

Vorzugsweise kann ergänzend auch eine die Längsdynamik des eigenen Fahrzeuges nicht beeinflussende Anforderung, beispielsweise ein Fahrzeug-Soll-Lenkwinkel, plausibilisiert werden. Somit kann vorteilhafterweise auch auf eine fehlerhafte Umsetzung einer automatisiert vorgegebenen Lenkung des Fahrzeug über einen Bremseingriff reagiert werden, wobei ein Ausfall oder ein Defekt in der Lenkung vorzugsweise in einer Selbstdiagnose erkannt und an die Überwachungseinrichtung gemeldet wird.

Zur Ansteuerung der Radbremsen im automatisierten Betrieb außerhalb des Redundanzfalles, d.h. im automatisierten Normalbetrieb, wird in Abhängigkeit der über das Anforderungs-Signal elektronisch übertragenen Fahrzeug-Soll-Beschleunigung und/oder der Fahrzeug-Soll-Geschwindigkeit von der ersten Steuereinrichtung elektronisch mindestens ein Steuerventil, beispielsweise ein Achsmodulator oder ein Relaisventil, angesteuert, das über einen Radbrems-Steuerdruck die Radbremsen mindestens einer Fahrzeugachse pneumatisch ansteuert, falls eine Verringerung der Fahrzeug-Soll-Geschwindigkeit, d.h. eine Bremsung, erforderlich ist, um die automatisiert vorgegebene Anforderung umzusetzen. Weiterhin kann im automatisierten Normalbetrieb in Abhängigkeit der automatisiert vorgegebenen Anforderung auch eine elektronische Ansteuerung eines sekundären Bremssystems, vorzugsweise eines durch ein Parkbremsventil gesteuerter, unabhängiger Bremskreis vorgesehen sein, durch den eine Bremsung oder auch ein Halten im Stillstand bewirkt werden kann. Dabei werden durch das Parkbremsventil vorzugsweise Radbremsen mit einem kombinierten Betriebsbrems- und Federspeicherzylinder angesteuert.

Bei einem Ausfall oder einem Defekt in der ersten Steuereinrichtung oder bei einer fehlerhaften Umsetzung des automatisiert vorgegebenen Anforderungs-Signals kann stattdessen über die zweite Steuereinrichtung in der Redundanzanordnung eine elektronisch-pneumatisch gesteuerte redundante Bremsung erfolgen, so dass hierdurch elektronisch-pneumatische Rückfallebenen bzw. Redundanzen ausgebildet werden können. Die zweite Steuereinrichtung steuert dazu elektronisch mindestens ein Redundanzventil in der Redundanzanordnung in Abhängigkeit des Anforderungs-Signals oder des Korrektur-Signals an.

Das mindestens eine Redundanzventil kann hierbei beispielsweise als ein Drucksteuerventil ausgeführt sein, das in Abhängigkeit des automatisierten Anforderungs-Signals oder des Korrektur-Signals einen Steuerventil-Steuerdruck zum pneumatischen Ansteuern des mindestens einen Steuerventils ausgibt. Somit wird von einer elektronischen Ansteuerung des Steuerventils im automatisierten Normalbetrieb zu einer pneumatischen Ansteuerung des Steuerventils im Redundanzfall gewechselt.

Alternativ kann auch das Parkbremsventil als Redundanzventil verwendet werden, das somit ebenfalls Teil der Redundanzanordnung ist. Das Parkbremsventil kann also sowohl für eine durch die Redundanzanordnung durchgeführte redundante Bremsung herangezogen werden als auch für eine Bremsung im automatisierten Normalbetrieb, wobei in beiden Fällen vorzugsweise die zweite Steuereinrichtung die elektronische Ansteuerung übernimmt. D.h. auch die zweite Steuereinrichtung hat eine Doppelfunktion, indem sie im Redundanzfall das Parkbremsventil in Abhängigkeit der automatisierten Anforderungen oder in Abhängigkeit des Korrektur-Signals ansteuert und im automatisierten Normalbetrieb beispielsweise in Abhängigkeit einer vom Fahrer oder einer automatisiert vorgegebenen Parkbremsfunktion. Vorteilhafterweise können dadurch im Fahrzeug vorhandene Komponenten für mehrere Funktionen verwendet werden, so dass Kosten gespart werden können.

Es kann auch eine Kombination von beiden vorgesehen sein, so dass eine redundante Bremsung über das Parkbremsventil und gleichzeitig über das Steuerventil erfolgen kann. Die Redundanzanordnung weist dann insbesondere die zweite Steuereinrichtung und zwei Redundanzventile auf. Dadurch kann vorteilhafterweise sichergestellt werden, dass auch bei einem Defekt der Steuerventile eine redundante Bremsung bewirkt werden kann, da über das Parkbremsventil ein unabhängiger Bremskreis angesteuert wird.

Die Rückfallebene bzw. Redundanz in Bezug auf eine fehlerhafte Umsetzung des automatisiert vorgegebenen Anforderungs-Signals wird durch die erfindungsgemäße Überwachungseinrichtung gesteuert, wobei diese über das Korrektur-Signal auf die im Fahrzeug vorhandene redundante Ansteuerung der Radbremsen durch die Redundanzanordnung zurückgreifen kann. Vorzugsweise ist die Überwachungseinrichtung im Übertragungspfad des Anforderungs-Signals zwischen der dritten Steuereinrichtung und der zweiten Steuereinrichtung geschaltet, so dass das Anforderungs-Signal immer über die Überwachungseinrichtung zur zweiten Steuereinrichtung gelangt. Folgt aus der Plausibilisierung auf der Überwachungseinrichtung, dass das Anforderungs-Signal fehlerfrei ist, wird dieses von der Überwachungseinrichtung unverändert an die zweite Steuereinrichtung übertragen. Bei einem fehlerhaften Anforderungs-Signal hingegen wird das Korrektur-Signal an die zweite Steuereinrichtung übertragen.

Zum Feststellen, ob eine fehlerhafte oder unvollständige Umsetzung des automatisiert vorgegebenen Anforderungs-Signals vorliegt, d.h. ob eine aktuell vorliegende Fahrzeug-Ist-Längsdynamik des eigenen Fahrzeuges von einer aufgrund der automatisiert vorgegebenen Anforderungen folgenden Fahrzeug-Soll-Längsdynamik unter Berücksichtigung der Toleranz abweicht, oder ob die automatisiert vorgegebenen Anforderungen ohne Fehler vollständig umgesetzt werden können, sind mehrere Möglichkeiten vorgesehen:
Zum einen kann eine Plausibilisierung der Anforderungen stattfinden, indem bei einer Übertragung der Fahrzeug-Soll-Beschleunigung sowie der Fahrzeug-Soll-Geschwindigkeit über das Anforderungs-Signal die zeitliche Veränderung der Fahrzeug-Soll-Geschwindigkeit, d.h. die mathematische Ableitung, mit der Fahrzeug-Soll-Beschleunigung verglichen wird. Weicht die Fahrzeug-Soll-Beschleunigung um eine Toleranz von der Ableitung ab, kann darauf geschlossen werden, dass die automatisierte Anforderung nicht fehlerfrei umgesetzt werden kann, da beide identisch sein müssten. D.h. über die jeweiligen Aktuatoren kann entweder die Fahrzeug-Soll-Beschleunigung oder die Fahrzeug-Soll-Geschwindigkeit fehlerfrei umgesetzt werden. Für die jeweilig andere Anforderung ist die Umsetzung zwangsläufig fehlerhaft.

Weiterhin können die über das Anforderungs-Signal übertragenen Anforderungen Sprünge aufweisen, d.h. eine Fahrzeug-Soll-Geschwindigkeit, ein Fahrzeug-Soll-Lenkwinkel und/oder eine Fahrzeug-Soll-Richtung verlaufen zeitlich betrachtet nicht monoton, d.h. es wird aufgrund des Sprunges eine sehr schnelle Änderung der Fahrzeugdynamik angefordert, deren Umsetzung physikalisch nicht möglich ist. Bei der Fahrzeug-Soll-Richtung kann ein nicht-monotoner Verlauf insbesondere dadurch auftreten, dass von der Fahrzeug-Soll-Richtung "vorwärts" zu "rückwärts" gewechselt wird, ohne dazwischen über die Fahrzeug-Soll-Richtung den "Stillstand" des Fahrzeuges anzufordern. Die Fahrzeug-Ist-Längsdynamik weicht also gezwungenermaßen von der unmöglich durchsetzbaren Anforderung, d.h. der Fahrzeug-Soll-Längsdynamik, ab. Dies kann beispielsweise auf einen Fehler bei der Berechnung der jeweiligen Anforderungen oder bei der Übertragung hinweisen, mit denen eine zuverlässige automatisierte Steuerung nicht sichergestellt werden kann. Auch bei der Fahrzeug-Soll-Beschleunigung können Sprünge aufgrund eines zeitlich nicht monotonen Verlaufs auftreten, die einen Ruck verursachen. Auch dies kann erkannt und entsprechend berücksichtigt werden, um durch den Ruck keinen sicherheitskritischen Zustand des Fahrzeuges zu verursachen oder den Fahrer nicht zu erschrecken.

Um die aktuell vorliegende Fahrzeug-Ist-Längsdynamik einzubeziehen, wird von der Überwachungseinrichtung eine die aktuelle Fahrzeug-Ist-Längsdynamik beschreibende Größe herangezogen, wobei diese die aktuelle Bewegung des eigenen Fahrzeugs entlang einer Längsrichtung charakterisiert. Diese Größe kann beispielsweise eine Fahrzeug-Ist-Geschwindigkeit und/oder eine Fahrzeug-Ist-Beschleunigung und/oder eine Fahrzeug-Ist-Richtung sein, die die Geschwindigkeit bzw. die Beschleunigung des eigenen Fahrzeuges in der Längsrichtung bzw. die Bewegungsrichtung des Fahrzeuges, d.h. vorwärts, Stillstand oder rückwärts, angibt. Die Fahrzeug-Ist-Richtung folgt hierbei vorzugsweise daraus, ob die Fahrzeug-Ist-Geschwindigkeit positiv oder negativ ist.

Die Fahrzeug-Ist-Geschwindigkeit und die Fahrzeug-Ist-Beschleunigung werden von einem beliebigen redundanten Geschwindigkeits-Sensor, beispielsweise einem oder mehreren Raddrehzahlsensoren an den Rädern einer nicht-angetriebenen Fahrzeugachse, vorzugsweise der Vorderachse, und/oder von einem redundanten Beschleunigungssensor während der Fahrt ermittelt. Vorzugsweise ist der Geschwindigkeits-Sensor derartig ausgeführt, dass aus seinen Messwerten eine Fahrzeug-Ist-Richtung ermittelt werden kann. Vorteilhafterweise können die Fahrzeug-Ist-Geschwindigkeit und die Fahrzeug-Ist-Beschleunigung ergänzend mit Werten von weiteren im Fahrzeug vorhandenen Sensoren plausibilisiert werden, um die Zuverlässigkeit zu erhöhen.

Eine fehlerhafte oder unvollständige Umsetzung der automatisierten Anforderung kann nun dadurch erkannt werden, dass die Fahrzeug-Ist-Längsdynamik nicht mit der Fahrzeug-Soll-Längsdynamik übereinstimmt, d.h. dass die Fahrzeug-Ist-Beschleunigung von der Fahrzeug-Soll-Beschleunigung und/oder die Fahrzeug-Ist-Geschwindigkeit von der Fahrzeug-Soll-Geschwindigkeit und/oder die Fahrzeug-Ist-Richtung von der Fahrzeug-Soll-Richtung abweicht.

Weiterhin kann eine fehlerhafte Umsetzung dadurch erkannt werden, ob das Integral der tatsächlich vorliegenden Fahrzeug-Ist-Geschwindigkeit betrachtet über einen Zeitraum von beispielsweise 500ms bis 3s mit einer automatisiert vorgegebenen Fahrzeug-Trajektorie, d.h. dem zukünftigen Fahrweg für diesen Zeitraum, übereinstimmt.

Eine Abweichung der Fahrzeug-Ist-Längsdynamik von der Fahrzeug-Soll-Längsdynamik kann beispielsweise dadurch auftreten, dass mindestens einer der Aktuatoren oder Sensoren im Fahrzeug oder ein Steuergerät für diese Aktuatoren oder Sensoren defekt ist oder nicht korrekt angesteuert wird, d.h. beispielsweise das Getriebe, eine Radbremse, die Dauerbremse, die Lenkung oder der Motor nicht auf die Weise angesteuert werden, wie es durch die automatisierten Anforderungen über das Anforderungs-Signal vorgegeben wird. Einige der Aktuatoren regeln hierbei ihre entsprechenden Stellgrößen in einem Regelkreis in Abhängigkeit von Sensor-Signalen, wobei in Abhängigkeit der Sensor-Signal überprüft wird, wie stark eine Anforderung von dem jeweiligen Aktuator bereits umgesetzt wurde und wie stark somit noch nachzuregeln ist. Somit kann es auch bei einem Sensor-Ausfall zu einer fehlerhaften Umsetzung durch den diesem Sensor zugeordneten Aktuator kommen.

Einen Ausfall oder einen Defekt einzelner Aktuatoren oder Sensoren oder auch einzelner Steuereinrichtungen kann beispielsweise über ein Diagnose-Signal von dem entsprechenden Steuergerät des jeweiligen Aktuators oder Sensors oder von der jeweiligen Steuereinrichtung an die Überwachungseinrichtung gemeldet werden, so dass diese den Ausfall entsprechend berücksichtigen kann bei der Ausgabe des Korrektur-Signals. Die einzelnen Steuergeräte bzw. Steuereinrichtung führen dazu eine Selbstdiagnose durch. Wird ein Fehler erkannt, der durch das jeweilige Steuergerät bzw. die jeweilige Steuereinrichtung nicht selbst behoben oder ausgeglichen werden kann, wird eine entsprechendes Korrektur-Signal ausgegeben, so dass die Redundanzanordnung bremsend eingreifen kann, um das Fahrzeug in einen sicheren Zustand zu überführen.

Weiterhin können sich Abweichungen dadurch ergeben, dass sich das Fahrzeug beim Starten in die falsche Richtung bewegt, d.h. die Fahrzeug-Ist-Richtung unterscheidet sich von der Fahrzeug-Soll-Richtung bzw. die Fahrzeug-Ist-Geschwindigkeit hat ein anderes Vorzeichen als die Fahrzeug-Soll-Geschwindigkeit, beispielsweise weil das Getriebe fehlerhaft angesteuert wurde. Oder das Fahrzeug wird automatisiert unbeabsichtigt gestartet oder rollt unbeabsichtigt auf einem Gefälle, d.h. eine Fahrzeug-Soll-Geschwindigkeit von Null wird nicht eingehalten, weil beispielsweise das Parkbremsventil nicht wie angefordert angesteuert werden konnte.

Eine fehlerhafte oder unvollständige Umsetzung kann auch aufgrund einer fehlerhaften Übertragung des Anforderungs-Signals, beispielsweise über einen CAN-Bus, vorkommen. Liegt beispielsweise ein Ausfall oder ein Defekt bei der Signalübertragung von der dritten Steuereinrichtung vor, beispielsweise ein CAN-Fehler, kann eine zuverlässige automatisierte Ansteuerung des Fahrzeuges nicht gewährleistet werden. Einen Ausfall oder einen Defekt bzw. einen Fehler in der Übertragung kann beispielsweise dadurch erkannt werden, dass das Anforderungs-Signal nicht wie erwartet an der ersten Steuereinrichtung, der zweiten Steuereinrichtung, der Überwachungseinrichtung oder den jeweiligen Aktuatoren ankommt, beispielsweise weil Anforderungen lückenhaft empfangen werden und somit nicht monoton verlaufen oder die Wertebereiche der Signale ungültig sind oder deren Prüfsumme ungültig ist oder die Anforderungen zu schnell oder zu langsam übertragen werden (Timing).

Somit können unterschiedliche Ursachen für eine fehlerhafte Umsetzung der Anforderungen vorliegen, wobei in Abhängigkeit der Ursachen auch das ermittelte Korrektur-Signal variiert:

Wird in irgendeiner Weise festgestellt, dass eine fehlerhafte Umsetzung der automatisiert vorgegebenen Anforderungen beispielsweise aufgrund eines Ausfall oder eines Defekts in der dritten Steuereinrichtung, ein Übertragungsfehler über den CAN-Bus oder ein Fehler oder Defekt an den Aktuatoren oder Sensoren vorliegt und somit nicht sichergestellt werden kann, dass das Fahrzeug mit dem Anforderungs-Signal sicher angesteuert werden kann, wird ein Korrektur-Signal mit einer Korrektur-Verzögerung ausgegeben, mit dem die Redundanzanordnung über das mindestens eine Redundanzventil das Fahrzeug unter den geltenden Sicherheitsaspekten sicher zum Stillstand bringt. Dazu kann beispielsweise eine Korrektur-Verzögerung von zwischen -2,5m/s² und -4m/s², beispielsweise von -3.5 m/s², vorgegeben werden, so dass das Fahrzeug schnell und sicher auf einem kurzen Anhalteweg in den Stillstand abgebremst werden kann, ohne dabei den nachfolgenden Verkehr beispielsweise durch Auffahrunfälle zu gefährden oder eine Instabilität des eigenen Fahrzeuges zu verursachen.

Ergänzend kann eine Motor-Abschalteinrichtung vorgesehen sein, die beispielsweise bei einem Verbrennungsmotor die Kraftstoffzufuhr unterbricht, so dass dieser abgewürgt wird und somit nicht gegen die angeforderte Bremsung in den Stillstand arbeitet oder bei einem Ausfall der Bremsen das Fahrzeug weiter positiv beschleunigt. Bei einem Elektroantrieb kann durch die Motor-Abschalteinrichtung in entsprechender Weise die Energiezufuhr kontrolliert getrennt werden, um den Motor abzuschalten.

Liegt eine Abweichung zwischen der Fahrzeug-Soll-Beschleunigung und der Ableitung der Fahrzeug-Soll-Geschwindigkeit vor, kann ein Korrektur-Signal ausgegeben werden, das den konservativeren der beiden Anforderungen in eine Bremsung umsetzt, d.h. es wird die Anforderung gewählt, die zu einer weniger starken Bremsung führt.

Wird ein Fehler an einem der Aktuatoren erkannt, der eine fehlerhafte Umsetzung der Anforderungen bewirken kann, beispielsweise ein Ausfall einer ESC-Regelung (Fahrdynamikregelung) mit dem dennoch ein sicherer automatisierter Betrieb des Fahrzeuges gewährleistet werden kann, wird eine Korrektur-Geschwindigkeit ausgegeben, mit der das Fahrzeug sicher und zuverlässig gesteuert werden kann, beispielsweise eine Korrektur-Geschwindigkeit von 60km/h bei einem Ausfall der ESC-Regelung

Weicht hingegen die erwartete Fahrzeug-Soll-Längsdynamik von der aktuell ermittelten Fahrzeug-Ist-Längsdynamik ab und kann diese Abweichung durch einen korrigierenden Eingriff in die Bremsung sicher und zuverlässig ausgeglichen werden, so wird von der Überwachungseinrichtung eine Korrektur-Verzögerung und/oder eine Korrektur-Geschwindigkeit bestimmt, die diesen Ausgleich bewirken kann. Dazu kann auch eine Korrektur-Verzögerung von kleiner als -4m/s² festgelegt werden, um beispielsweise einen möglichst kurzen Bremsweg zu erreichen, beispielsweise für eine Notbremsung vor einem Hindernis.

Vorzugsweise wird diese ausgleichenden Bremsung lediglich dann durchgeführt, wenn im automatisiert angesteuerten Bremssystem eine ABS-Regelung nicht aktiv ist, d.h. kein ABS-Regeleingriff erkannt wurde. Dadurch kann die Sicherheit und die Zuverlässigkeit des korrigierenden Eingriffes in die Bremsung erhöht werden, da das Risiko einer durch die redundante Bremsung ausgelösten Instabilität verringert wird.

Die Korrektur-Verzögerung bzw. die Korrektur-Geschwindigkeit können ergänzend auch unter Berücksichtigung von Längsdynamik-Grenzwerten des Fahrzeuges, beispielsweise einer Maximalgeschwindigkeit und/oder einer Maximalbeschleunigung, erfolgen, so dass vorteilhafterweise eine sichere automatisierte Steuerung gewährleistet werden kann, mit der das Fahrzeug beispielsweise trotz einer steigenden Fahrzeug-Soll-Geschwindigkeit nicht über die Maximalgeschwindigkeit positiv beschleunigt wird.

Vorzugsweise kann ergänzend zum korrigierenden Bremseingriff über die Redundanzanordnung auch ein Warnsignal oder eine Warnleuchte für den Fahrer sowie ein Bremslicht oder ein Warnblinklicht für den nachfolgenden Verkehr angesteuert werden, so dass sich sowohl der Fahrer als auch der nachfolgende Verkehr auf eine korrigierende Bremsung aufgrund einer fehlerhaften automatisierten Umsetzung einstellen können.

Die Redundanzanordnung, insbesondere die zweite Steuereinrichtung, oder die Überwachungseinrichtung kann vorteilhafterweise zusätzlich ausgebildet sein, einen Bremsschlupffall infolge einer redundanten Bremsung zu erkennen und daraufhin von einer dauerhaften Ansteuerung des Redundanzventils auf eine gepulste Ansteuerung zu wechseln, um eine Instabilität des Fahrzeuges im Redundanzfall und eine eingeschränkte Lenkbarkeit zu vermeiden.

Die erfindungsgemäße Überwachungseinrichtung ist vorzugsweise Teil der in der Redundanzanordnung angeordneten zweiten Steuereinrichtung, wobei die Überwachungseinrichtung dazu eine auf der zweiten Steuereinrichtung ausgeführte Software-Logik beinhalten kann. Die Überwachungseinrichtung kann allerdings auch baulich getrennt von der zweiten Steuereinrichtung ausgebildet sein.

Vorteilhafterweise kann somit in einfacher Weise eine Überwachungseinrichtung mit einer Software-Logik bereitgestellt werden, die selbständig entscheidet, zu welchem Zeitpunkt redundant in die Bremsung einzugreifen ist, weil die automatisiert vorgegebene Anforderung in irgendeiner Weise durch die Aktuatoren im Fahrzeug nicht umgesetzt wird oder werden kann. Die Software-Logik kann somit korrigierte Anforderungen für die Redundanzanordnung ausgeben, so dass diese bremsend eingreifen kann, wobei dieser Eingriff vergleichbar ist zu einem manuellen Eingriff eines Fahrers in einem automatisiert gesteuerten Fahrzeug.

Der Fahrer wird manuell durch Betätigung eines Fußbremspedals eingreifen und dadurch ggf. die automatisierte Anforderung übersteuern, wenn der Fahrer beispielsweise feststellt, dass eine Überschreitung der Geschwindigkeitsbegrenzung vorliegt, einer der Aktuatoren, beispielsweise die automatisierte Lenkung, nicht mehr funktioniert, das Fahrzeug ungewollt gestartet wird, das Fahrzeug in die falsche Richtung fährt, ein Warnleuchte aktiviert wird, oder eine Abweichung vom geplanten Pfad vorliegt, etc. Der Fahrer greift somit bremsend ein, um infolge des von ihm erkannten Fehlers eine sichere Fahrt des Fahrzeuges zu gewährleisten.

Vorteilhafterweise kann - falls das automatisiert gesteuerte Fahrzeug ohne Fahrer fährt oder der Fahrer unaufmerksam oder mit anderen Dingen beschäftigt ist oder nicht am Fahrerplatz sitzt- die Reaktion des Fahrers automatisch durch die Überwachungseinrichtung erfolgen und dadurch die Sicherheit erhöht werden, indem in den o.g. Fällen statt dem Fahrer die Software-Logik der Überwachungseinrichtung einen Fehler erkennen, diesen einordnen und in entsprechender Weise in die Bremsung eingreifen kann.

Vorteilhafterweise ist ergänzend vorgesehen, dass der Fahrer durch eine Betätigung des Bremspedals, beispielsweise in einer Notbremssituation oder wenn er eine zu schwache Bremsung durch die automatisierte Ansteuerung beispielsweise im Hinblick auf den vorausliegenden Verkehr oder Instabilität den Fahrzeuges erkennt, dennoch in die korrigierte Bremsung eingreifen kann und somit sowohl die von der ersten Steuereinrichtung ausgegebene, automatisierte Anforderung als auch die von der Überwachungseinrichtung korrigierte Anforderung übersteuern kann, um die Gefahr eines Unfalls zu verringern.

Vorteilhafterweise ist ergänzend vorgesehen, dass der Fahrer oder auch eine andere befähigte Person direkt ein Not-Signal an die Überwachungseinrichtung ausgeben können, um das Fahrzeug über die Redundanzanordnung in den Stillstand zu bringen, beispielsweise in einer Notbremssituation. Die Überwachungseinrichtung steuert dann ein entsprechendes Korrektur-Signal aus, das diesen Stillstand bewirkt.

Um die Funktionalität der Überwachungseinrichtung auch bei einem Ausfall oder einem Defekt im Normalbetrieb des Fahrzeuges, d.h. im Redundanzfall, sicherzustellen, kann die Überwachungseinrichtung an eine zusätzliche Energieversorgung angeschlossen sein, die beispielsweise auch die zweite Steuereinrichtung und/oder eine redundante Lenkung mit Energie versorgt, um im Redundanzfall dennoch eine sichere und zuverlässige Bremsung und/oder Lenkung bewirken zu können.

Vorzugsweise kann von der Überwachungseinrichtung auch berücksichtigt werden, ob das Fahrzeug mit einem Anhänger fährt, wobei dazu auch eine redundante Anhänger-Erkennung vorgesehen sein kann.

Die Erfindung wird im Folgenden anhand der beiliegenden Zeichnung erläutert. Es zeigen:
- Fig. 1: ein erfindungsgemäßes Bremssystem mit einer Überwachungseinrichtung gemäß einer ersten Ausführungsform als Blockschaltbild;
- Fig. 2: ein erfindungsgemäßes Bremssystem mit einer Überwachungseinrichtung gemäß einer weiteren Ausführungsform als Blockschaltbild; und
- Fig. 3: ein Flussdiagramm zur Durchführung des Verfahrens

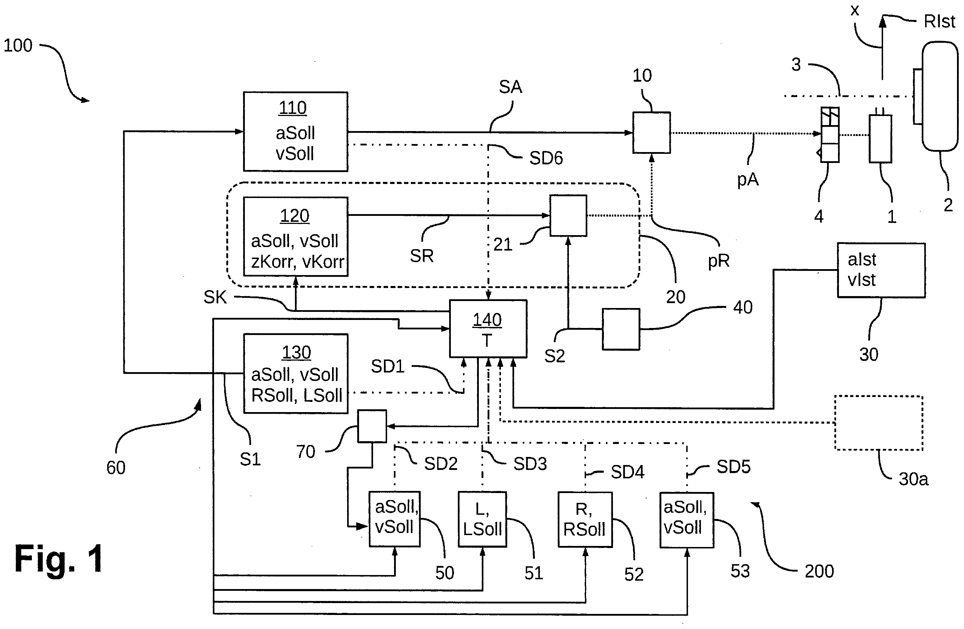

In der Ausführungsform gemäß Fig. 1 ist ein Ausschnitt aus einem Bremssystem 100 eines Fahrzeuges 200 als Blockschaltbild dargestellt. Demnach weist das Bremssystem 100 eine erste Steuereinrichtung 110, eine zweite Steuereinrichtung 120 sowie eine Überwachungseinrichtung 140 auf. Das Bremssystem 100 ist ausgebildet, das Fahrzeug 200 über Radbremsen 1, die jeweils Rädern 2 einer Fahrzeugachse 3 zugeordnet und denen optional elektronisch steuerbare ABS-Bremsventile 4 vorgeschaltet sind, abzubremsen. Der Einfachheit halber ist in der Ausführungsform gemäß Fig. 1 beispielhaft lediglich ein rechtes Vorderrad 2 einer Vorderachse 3 des Fahrzeuges 200 dargestellt. Weitere Räder können in entsprechender Weise mit oder ohne ABS-Bremsventilen 4 ausgeführt sein

Weiterhin ist eine Steuereinrichtung 130 dargestellt, die einem Regelsystem des Fahrzeuges 200 zugeordnet ist, das ausgebildet ist, das Fahrzeug 200 automatisiert, beispielsweise in Abhängigkeit einer geplanten Fahrzeugbewegung F, insbesondere unter Berücksichtigung des aktuellen Fahrzeugzustandes sowie einer Umgebungserfassung, zu steuern: Die automatisierte Ansteuerung erfolgt hierbei über Aktuatoren im Fahrzeug 200, d.h. insbesondere die Radbremsen 1 des Bremssystems 100, einem Motor 50, einer Lenkung 51, mit der ein Lenkwinkel L des Fahrzeuges 200 vorgegeben werden kann, einem Getriebe 52, mit dem insbesondere eine Fahrtrichtung R des Fahrzeuges 200 eingestellt werden kann, sowie einer Dauerbremse (Retarder) 53 über die ebenfalls eine Bremsung bewirkt werden kann.

Dazu kann von der dritten Steuereinrichtung 130 beispielsweise über einen CAN-Bus 60 ein Anforderungs-Signal S1 vorgegeben werden, in Abhängigkeit dessen die jeweiligen Aktuatoren 1, 50, 51, 52, 53 angesteuert werden. Das Anforderungs-Signal S1 wird dabei in Abhängigkeit der geplanten Fahrzeugbewegung F ermittelt, wobei in Abhängigkeit der aktuellen Lage des Fahrzeuges 200 beispielsweise der vorausliegende Streckenverlauf, z.B. ein Strecken- und Höhenprofil, über die Umgebungserfassung erkannt und daraufhin Anforderungen für die einzelnen Aktuatoren 1, 50, 51, 52, 53 im Fahrzeug 200 ermittelt werden, mit denen die geplante Fahrzeugbewegung F bewältigt werden kann. Bei den Anforderungen kann es sich insbesondere um eine Fahrzeug-Soll-Geschwindigkeit vSoll, eine Fahrzeug-Soll-Beschleunigung aSoll, einen Fahrzeug-Soll-Lenkwinkel LSoll sowie eine Fahrzeug-Soll-Richtung RSoll handeln, die über das Anforderungs-Signal S1 ausgegeben und über den CAN-Bus 60 von den entsprechenden Aktuatoren 1, 50, 51, 52, 53 bzw. deren Steuergeräten empfangen werden, um die für sie relevante Anforderung aSoll, vSoll, LSoll, RSoll in entsprechender Weise umsetzen.

So bewirkt der Motor 50 ein positives Beschleunigen des Fahrzeuges 200 mit der vorgegebenen Fahrzeug-Soll-Beschleunigung aSoll auf die vorgegebene Fahrzeug-Soll-Geschwindigkeit vSoll oder das Bremssystem 100 bzw. die Radbremsen 1 und/oder die Dauerbremse 53 ein entsprechendes negatives Beschleunigen mit der vorgegebenen Fahrzeug-Soll-Beschleunigung aSoll auf die vorgegebene Fahrzeug-Soll-Geschwindigkeit vSoll. Über die Lenkung 51 kann der Fahrzeug-Soll-Lenkwinkel LSoll eingestellt werden, um das Fahrzeug 200 in eine bestimmte Richtung zu lenken, und über das Getriebe 52 kann eine Fahrzeug-Soll-Richtung RSoll eingestellt werden, um das Fahrzeug 200 vorwärts oder rückwärts zu bewegen.

Das Bremssystem 100 wird dabei gemäß dieser Ausführungsform im automatisierten Normalbetrieb über die erste Steuereinrichtung 110 elektronisch-pneumatisch angesteuert, indem in Abhängigkeit des Anforderungs-Signals S1 die Radbremsen 1 mit einem entsprechenden Radbrems-Bremsdruck pA versorgt werden, wenn eine negative Beschleunigung gewünscht ist. Dazu gibt die erste Steuereinrichtung 110 in Abhängigkeit der vorgegebenen Fahrzeug-Soll-Beschleunigung aSoll und/oder der Fahrzeug-Soll-Geschwindigkeit vSoll ein elektronisches Steuerventil-Steuersignal SA an ein Steuerventil 10, beispielsweise ein einer Fahrzeugachse 3 zugeordnetes Relaisventil oder einen Achsmodulator, aus. Dieses steuert einen entsprechenden Radbrems-Bremsdruck pA an die Radbremsen 1 aus, um die vorgegebene Anforderung, d.h. die Fahrzeug-Soll-Beschleunigung aSoll bzw. die Fahrzeug-Soll-Geschwindigkeit vSoll zu bewirken.

Parallel dazu ist im Bremssystem 100 eine Redundanzanordnung 20 mit der zweiten Steuereinrichtung 120 angeordnet, die gemäß dieser Ausführungsform insbesondere in Abhängigkeit der vorgegebenen Fahrzeug-Soll-Beschleunigung aSoll und/oder der Fahrzeug-Soll-Geschwindigkeit vSoll elektronisch ein Redundanzsignal SR an ein erstes Redundanzventil 21 übertragen kann, das einen entsprechenden Redundanz-Steuerdruck pR pneumatisch an das Steuerventil 10 aussteuert. Aufgrund der pneumatischen Ansteuerung erzeugt das Steuerventil 10 einen entsprechenden Radbrems-Bremsdruck pA für die Radbremsen 1 zum Abbremsen des Fahrzeuges 200. Durch die Redundanzanordnung 20 ist eine redundante Ansteuerung der Radbremsen 1 in zweierlei Hinsicht möglich:
Zum einen kann bei einem Ausfall der Elektronik beispielsweise in der ersten Steuereinrichtung 110 auf eine elektronisch-pneumatische Ansteuerung über die Redundanzanordnung 20 zurückgegriffen werden, so dass von einer elektronischen Ansteuerung des Steuerventils 10 auf eine pneumatische Ansteuerung des Steuerventils 10 gewechselt wird. Somit kann eine Rückfallebene ausgebildet werden. Zum anderen kann über die Überwachungseinrichtung 140 korrigierend in die von der ersten Steuereinrichtung 110 oder von der zweiten Steuereinrichtung 120 aufgrund des Anforderungs-Signals S1 vorgegebene Bremsanforderung eingegriffen werden.

Die Überwachungseinrichtung 140 wertet dazu die über das Anforderungs-Signal S1 ausgegebenen Anforderung aSoll, vSoll, LSoll, RSoll aus und plausibilisiert diese. Dabei stellt die Überwachungseinrichtung 140 fest, ob das Anforderungs-Signal S1 bzw. mindestens eine der darüber übertragenen Anforderungen aSoll, vSoll, LSoll, RSoll von den Aktuatoren 1, 50, 51, 52, 53 richtig, d.h. fehlerfrei und vollständig, umgesetzt wird oder werden kann, d.h. ob ein Ist-Zustand, insbesondere eine Fahrzeug-Ist-Längsdynamik DIst, von einer durch die Anforderungen aSoll, vSoll, LSoll, RSoll charakterisierten Fahrzeug-Soll-Längsdynamik DSoll unter Berücksichtigung einer Toleranz T abweicht. Ist dies nicht der Fall, steuert die Überwachungseinrichtung 140 ein Korrektur-Signal SK an die zweite Steuereinrichtung 120 aus, wobei das Korrektur-Signal SK eine Korrektur-Verzögerung zKorr und/oder eine Korrektur-Geschwindigkeit vKorr enthält. Mit der Korrektur-Verzögerung zKorr und/oder der Korrektur-Geschwindigkeit vKorr wird der Redundanzanordnung 20 eine korrigierende Anforderung übermittelt, mit der die fehlerhafte oder unvollständige Umsetzung des Anforderungs-Signals S1 ausgeglichen oder mit der auf die fehlerhafte oder unvollständige Umsetzung reagiert werden soll, wobei dies durch einen Eingriff in die Radbremsen 1 über die Redundanzanordnung 20 erfolgt.

Das Redundanz-Signal SR wird dazu mit der Korrektur-Verzögerung zKorr und/oder der Korrektur-Geschwindigkeit vKorr überschrieben, falls bereits von der zweiten Steuereinrichtung 120 aufgrund des Anforderungs-Signals S1 eine redundante Bremsung angefordert wurde. Somit wird das Redundanzventil 21 in Abhängigkeit der Korrektur-Verzögerung zKorr und/oder der Korrektur-Geschwindigkeit vKorr angesteuert und das Steuerventil 10 steuert einen zum pneumatisch vorgegebenen Redundanz-Steuerdruck pR entsprechenden Radbrems-Steuerdruck pA aus.

Ob das Anforderungs-Signal S1 fehlerhaft oder unvollständig umgesetzt wurde oder nicht fehlerfrei oder vollständig umgesetzt werden kann, kann hierbei beispielsweise erkannt werden, indem eine zeitliche Veränderung in einem Zeitraum dt der Fahrzeug-Soll-Geschwindigkeit vSoll, d.h. deren mathematische Ableitung, mit der Fahrzeug-Soll-Beschleunigung aSoll verglichen wird. Weicht die Fahrzeug-Soll-Beschleunigung aSoll von der Ableitung ab, kann darauf geschlossen werden, dass zumindest eine der Anforderungen vSoll, aSoll fehlerhaft umgesetzt werden wird, da beide in etwa identisch sein müssen.

Weiterhin können die über das Anforderungs-Signal S1 übertragenen Anforderungen aSoll, vSoll, RSoll, LSoll Sprünge aufweisen, d.h. die Fahrzeug-Soll-Beschleunigung aSoll, die Fahrzeug-Soll-Geschwindigkeit vSoll, der Fahrzeug-Soll-Lenkwinkel LSoll und/oder die Fahrzeug-Soll-Richtung RSoll verlaufen zeitlich betrachtet nicht monoton, was aufgrund der Sprünge zu einer physikalisch unmöglichen Anforderung an die Aktuatoren 1, 50, 51, 52, 53 oder einem Ruck bei einer nicht-monotonen Fahrzeug-Soll-Beschleunigung aSoll führt, die von diesen somit nicht umgesetzt werden können. Dies kann insbesondere auf einen Fehler bei der Berechnung der Anforderungen aSoll, vSoll, RSoll, LSoll oder eine fehlerhafte Übertragung hinweisen, mit denen eine zuverlässige automatisierte Steuerung nicht sichergestellt werden kann.

Ergänzend oder alternativ kann auch vorgesehen sein, zu plausibilisieren, ob die Übertragung des Anforderungs-Signals S1 über den CAN-Bus 60 fehlerbehaftet ist und aufgrund dessen eine Umsetzung der Anforderungen fehlschlägt oder fehlschlagen wird. Liegt beispielsweise ein Ausfall oder ein Defekt bei der Signalübertragung von der dritten Steuereinrichtung 130 vor, beispielsweise ein CAN-Fehler, kann eine zuverlässige Ansteuerung über das Anforderungs-Signal S1 nicht gewährleistet werden. Einen Ausfall oder einen Defekt bzw. einen Fehler in der Übertragung kann beispielsweise dadurch erkannt werden, dass von der dritten Steuereinrichtung 130 über ein erstes Diagnose-Signal SD1 ein Defekt gemeldet wird oder aber das Anforderungs-Signal S1 nicht wie erwartet an der zweiten Steuereinrichtung 120 ankommt, beispielsweise weil Anforderungen aSoll, vSoll, RSoll, LSoll jeweils lückenhaft von der zweiten Steuereinrichtung 120 empfangen werden. Das Diagnose-Signal SD1 wird hierbei beispielsweise in Abhängigkeit einer Eigendiagnose erstellt.

Weiterhin wird die aktuell vorliegende Fahrzeug-Ist-Längsdynamik Dist des eigenen Fahrzeuges 200 überwacht und darüber die Anforderungs-Signale S1 plausibilisiert. Dazu zieht die Überwachungseinrichtung 140 eine die aktuelle Fahrzeug-Ist-Längsdynamik DIst beschreibende Größe heran, wobei diese die aktuelle Bewegung des eigenen Fahrzeugs 200 entlang einer Längsrichtung x charakterisiert. Diese Größe kann beispielsweise eine Fahrzeug-Ist-Geschwindigkeit vlst und/oder eine Fahrzeug-Ist-Beschleunigung alst und/oder eine Fahrzeug-Ist-Richtung Rist sein, die die Geschwindigkeit bzw. die Verzögerung des eigenen Fahrzeuges 200 bzw. die Bewegungsrichtung, d.h. vorwärts, Stillstand oder rückwärts, angibt. Die Fahrzeug-Ist-Richtung Rist ergibt sich hierbei vorzugsweise aus dem Vorzeichen der Fahrzeug-Ist-Geschwindigkeit vlst.

Gemäß einer Variante ist vorgesehen, lediglich diejenigen Anforderungen vSoll, aSoll, RSoll zu plausibilisieren, die mit einer positiven Fahrzeug-Soll-Beschleunigung aSoll zusammenhängen, d.h. festzustellen, ob die vom Antrieb, d.h. insbesondere dem Motor 50 oder dem Getriebe 52 umzusetzenden Anforderungen vSoll, aSoll, RSoll auch fehlerfrei und vollständig umgesetzt werden oder werden können und falls nicht, korrigierend in die Bremsung einzugreifen.

Die Fahrzeug-Ist-Geschwindigkeit vlst und die Fahrzeug-Ist-Beschleunigung alst werden hierbei von einem redundanten Geschwindigkeits-Sensor 30, beispielsweise einem redundanten Raddrehzahlsensor an den Rädern 2 der nicht-angetriebenen Vorderachse 3, ermittelt. Diese ermittelten Werte alst, vlst können durch weitere Sensoren 30a im Fahrzeug 200 plausibilisiert werden, um die Zuverlässigkeit der Werte zu erhöhen. Um die Fahrzeug-Ist-Richtung RIst aus der Messung des redundanten Geschwindigkeits-Sensors 30 erhalten zu können, ist dieser ausgebildet, die Fahrzeug-Ist-Geschwindigkeit vlst zusammen mit der Richtung, beispielsweise über das Vorzeichen, auszugeben.

Eine fehlerhafte Umsetzung des Anforderungs-Signals S1 in Abhängigkeit der Fahrzeug-Längsdynamik Dlst kann dann beispielsweise dadurch erkannt werden, dass eine erwartete Fahrzeug-Soll-Längsdynamik DSoll aufgrund der angeforderten Fahrzeug-Soll-Beschleunigung aSoll und/oder der Fahrzeug-Soll-Geschwindigkeit vSoll und/oder der Fahrzeug-Soll-Richtung RSoll von der aktuellen Fahrzeug-Ist-Beschleunigung alst bzw. Fahrzeug-Ist-Geschwindigkeit vlst bzw. Fahrzeug-Ist-Richtung Rist abweicht.

Dies kann ergänzend auch unter Berücksichtigung von Längsdynamik-Grenzwerten DGrenz des Fahrzeuges 200, beispielsweise einer Maximalgeschwindigkeit vMax oder einer Maximalbeschleunigung aMax, erfolgen, so dass vorteilhafterweise eine sichere automatisierte Steuerung gewährleistet werden kann.

Eine Abweichung der Fahrzeug-Ist-Längsdynamik DIst von der Fahrzeug-Soll-Längsdynamik DSoll kann beispielsweise dadurch auftreten, dass mindestens einer der Aktuatoren 1, 50, 51, 52, 53 im Fahrzeug 200 - bzw. eine Ansteuerung dieser Aktuatoren 1, 50, 51, 52, 53 - defekt ist, d.h. beispielsweise das Getriebe 52, eine der Radbremsen 1, die Lenkung 51, die Dauerbremse 53 und/oder der Motor 50 nicht korrekt angesteuert werden können. D.h. die über das Anforderungs-Signal S1 übertragenen und von den Aktuatoren 1, 50, 51, 52, 53 umzusetzenden Anforderungen aSoll, vSoll, RSoll, LSoll können unter Umständen nicht richtig umgesetzt werden. Ein derartiger Ausfall einzelner Komponenten kann beispielsweise über Diagnose-Signale SD2, SD3, SD4, SD5 von den Aktuatoren 1, 50, 51, 52, 53 bzw. deren Steuergeräten an die Überwachungseinrichtung 140 gemeldet werden, so dass diese den Ausfall entsprechend berücksichtigen kann. Die Diagnose-Signale SD2, SD3, SD4, SD5 werden hierbei von den entsprechenden Aktuatoren 1, 50, 51, 52, 53 bzw. deren Steuergeräten in einer Eigendiagnose erstellt, bei der die Funktionsfähigkeit überprüft wird. Wird festgestellt, dass ein erkannter Defekt nicht selbst ausgeglichen oder behoben werden kann, wird dies über das entsprechende Diagnose-Signal SD2, SD3, SD4, SD5 an die Überwachungseinrichtung 140 ausgegeben.

Auch die erste Steuereinrichtung 110 kann ein derartiges Diagnose-Signal SD6 aufgrund einer Selbstdiagnose an die Überwachungseinrichtung 140 übermitteln, so dass diese bei einem Ausfall redundant über die Redundanzanordnung 20 eingreifen kann, beispielsweise wenn die erste Steuereinrichtung 110 kein Anforderungs-Signal S1 mehr empfängt.

Einige der Aktuatoren 1, 50, 51, 52, 53 regeln hierbei ihre entsprechenden Stellgrößen in einem Regelkreis in Abhängigkeit von Sensor-Signalen von hier nicht dargestellten Sensoren, wobei in Abhängigkeit des jeweiligen Sensor-Signals überprüft wird, wie stark eine Anforderung aSoll, vSoll, RSoll, LSoll von dem jeweiligen Aktuator 1, 50, 51, 52, 53 bereits umgesetzt wurde und wie stark somit noch nachzuregeln ist. Somit kann es auch bei einem Sensor-Ausfall zu einer fehlerhaften Umsetzung durch den diesem Sensor zugeordneten Aktuator 1, 50, 51, 52, 53 kommen.

Weiterhin können sich Abweichungen dadurch ergeben, dass sich das Fahrzeug 200 beim Starten in die falsche Richtung bewegt, d.h. die Fahrzeug-Ist-Richtung Rist unterscheidet sich von der Fahrzeug-Soll-Richtung RSoll bzw. die Fahrzeug-Ist-Geschwindigkeit vlst hat ein anderes Vorzeichen als die Fahrzeug-Soll-Geschwindigkeit vSoll. Oder das Fahrzeug 200 wird automatisiert unbeabsichtigt gestartet oder rollt unbeabsichtigt auf einem Gefälle, d.h. eine Fahrzeug-Soll-Geschwindigkeit vSoll von Null wird nicht eingehalten.

Somit können unterschiedliche Ursachen für eine fehlerhafte Umsetzung des Anforderungs-Signal S1 vorliegen, wobei in Abhängigkeit der Ursachen auch das ermittelte Korrektur-Signal SK variiert:
Wird in irgendeiner Weise festgestellt, dass bereits eine fehlerhafte Übertragung des Anforderungs-Signal S1 vorliegt, beispielsweise weil ein Ausfall oder ein Defekt in der dritten Steuereinrichtung 130, ein Übertragungsfehler im CAN-Bus 60 oder ein Fehler an den Aktuatoren 1, 50, 51, 52, 53 vorliegt und somit nicht sichergestellt werden kann, dass das Fahrzeug 200 mit dem Anforderungs-Signal S1 sicher angesteuert werden kann, wird ein Korrektur-Signal SK mit einer Korrektur-Verzögerung zKorr ausgegeben, mit dem die Redundanzanordnung 20 über das mindestens eine Redundanzventil 21 das Fahrzeug 200 unter den geltenden Sicherheitsaspekten sicher zum Stillstand bringt oder aber auf eine Sicherheits-Geschwindigkeit vSafe abbremst, mit der das Fahrzeug 200 an eine sichere Position befördert werden kann. Dazu kann beispielsweise eine Korrektur-Verzögerung zKorr von zwischen -2m/s² und -4m/s², vorzugsweise -3.5m/s², vorgegeben werden, so dass das Fahrzeug schnell und sicher in den Stillstand oder auf die Sicherheits-Geschwindigkeit vSafe abgebremst werden kann, ohne dabei den nachfolgenden Verkehr zu gefährden.

Ergänzend kann eine Motor-Abschalteinrichtung 70 vorgesehen sein, die durch eine Abschaltung der Kraftstoffzufuhr den Motor 50 abgewürgt, so dass dieser nicht gegen die angeforderte Bremsung zKorr in den Stillstand oder auf die Sicherheits-Geschwindigkeit vSafe arbeitet oder bei einem Ausfall der Radbremsen 1 das Fahrzeug 200 unnötig beschleunigt.

Weicht die erwartete Fahrzeug-Soll-Längsdynamik DSoll von der aktuell ermittelten Fahrzeug-Ist-Längsdynamik DIst ab und kann diese Abweichung durch eine korrigierende Bremsung ausgeglichen werden, so wird von der Überwachungseinrichtung 140 eine entsprechende Korrektur-Verzögerung zKorr und/oder eine Korrektur-Geschwindigkeit vKorr bestimmt, die diesen Ausgleich bewirken kann. Dies erfolgt vorzugsweise unter Berücksichtigung der Längsdynamik-Grenzwerte DGrenz für das eigene Fahrzeug. Dazu kann auch eine Korrektur-Verzögerung zKorr von kleiner als -4m/s² festgelegt werden, um beispielsweise eine bestimmte Korrektur-Geschwindigkeit vKorr zu erreichen, beispielsweise bei Überschreitung einer Maximalgeschwindigkeit vMax des Fahrzeuges 200.

Ergänzend kann vorgesehen sein, eine derartige ausgleichende Bremsung lediglich dann zu bewirken, wenn vom Bremssystem 100 kein ABS-Bremsschlupffall erkannt wurde. Dadurch können Instabilitäten bei der redundanten Bremsung vermieden werden.

Somit kann bei einem Feststellen einer fehlerhaften oder unvollständigen Umsetzung des Anforderungs-Signals S1 bzw. der einzelnen Anforderungen aSoll, vSoll, RSoll, LSoll über das Korrektur-Signal SK die Redundanzanordnung 20 entsprechend angesteuert werden. Diese Ansteuerung kann weiterhin in Abhängigkeit eines durch die zweite Steuereinrichtung 120 erkannten Bremsschlupffalles infolge einer redundant ausgeführten Bremsung durch die Redundanzanordnung 20 geschehen. Die zweite Steuereinrichtung 120 kann dazu beispielsweise die Daten des redundanten Geschwindigkeitssensors 30 oder anderer Sensoren im Fahrzeug 200 auswerten, um festzustellen, ob eines der Räder 2 beim Bremsen blockiert. In dem Fall kann von einer dauerhaften Ansteuerung des jeweiligen Redundanzventils 21, 22 auf eine gepulste Ansteuerung des jeweiligen Redundanzventils 21, 22 gewechselt werden.

Ergänzend kann der Fahrer auch über ein Fußbremsventil 40 manuell in die Bremsung eingreifen, indem ein der Betätigung entsprechendes Fahrer-Signal S2 elektronisch oder pneumatisch an das Redundanzventil 21 ausgegeben wird, das dann ein dem Fahrer-Signal S2 entsprechenden Redundanz-Steuerdruck pR an das Steuerventil 10 aussteuert, um die Fahrerbremsung zu bewirken. Dazu kann das Redundanzventil 21 beispielsweise als ein Select-High Ventil ausgeführt sein, das die höhere der beiden über die Signale S2, SR übertragenen Bremsanforderung an das Steuerventil 10 pneumatisch aussteuert.

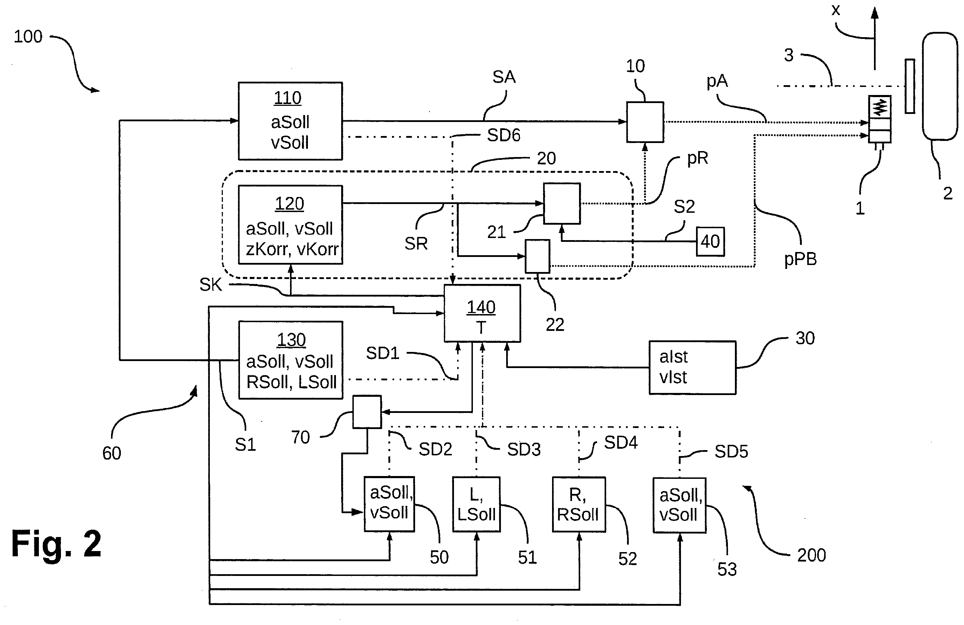

Gemäß Fig. 2 ist eine alternative Ausführung des Bremssystems 100 vorgesehen, bei dem in der Redundanzanordnung 20 ein zweites Redundanzventil 22, beispielsweise ein Parkbremsventil, angeordnet ist. Das Parkbremsventil 22 ist ebenfalls mit dem Redundanz-Signal SR elektronisch ansteuerbar, so dass dieses ergänzend zum ersten Redundanzventil 21 auch vom Parkbremsventil 22 umgesetzt werden kann. Gemäß einer nicht dargestellten alternativen Ausführungsform kann auch lediglich das Parkbremsventil 22 und kein erstes Redundanzventil 21 vorgesehen sein.

Das Parkbremsventil 22 ist pneumatisch mit einer Radbremse 1 an einer beliebigen Fahrzeugachse 3, vorzugsweise der angetriebenen Fahrzeugachse, verbunden, wobei diese Radbremse 1 vorzugsweise mit einem kombinierten Betriebsbrems- und Federspeicherzylinder ausgestattet ist, so dass diese Radbremse 1 sowohl mit einem vom Parkbremsventil 22 vorgegebenen Parkbrems-Bremsdruck pPB als auch - wie oben beschrieben - mit einen von dem Steuerventil 10 ausgesteuerten Radbrems-Bremsdruck pB pneumatisch angesteuert werden können.

Im automatisierten Normalbetrieb, d.h. wenn kein Redundanzfall vorliegt, kann das Parkbremsventil 22 auch über die zweite Steuereinrichtung 120 angesteuert werden, um beispielsweise eine automatisiert vorgegebene Parkbremsanforderung umzusetzen. Die zweite Steuereinrichtung 120 sowie das Parkbremsventil 22 haben somit eine Doppelfunktion, da sie sowohl im redundanten Bremsfall als auch im automatisierten Normalbetrieb zum verwendet werden können.

Gemäß einer nicht dargestellten Alternative kann auch lediglich das Parkbremsventil 22 vorgesehen sein und das erste Redundanzventil 21 entfallen. Eine redundante Bremsung wird dann lediglich über das Parkbremsventil 22 und die Radbremsen 1 umgesetzt.

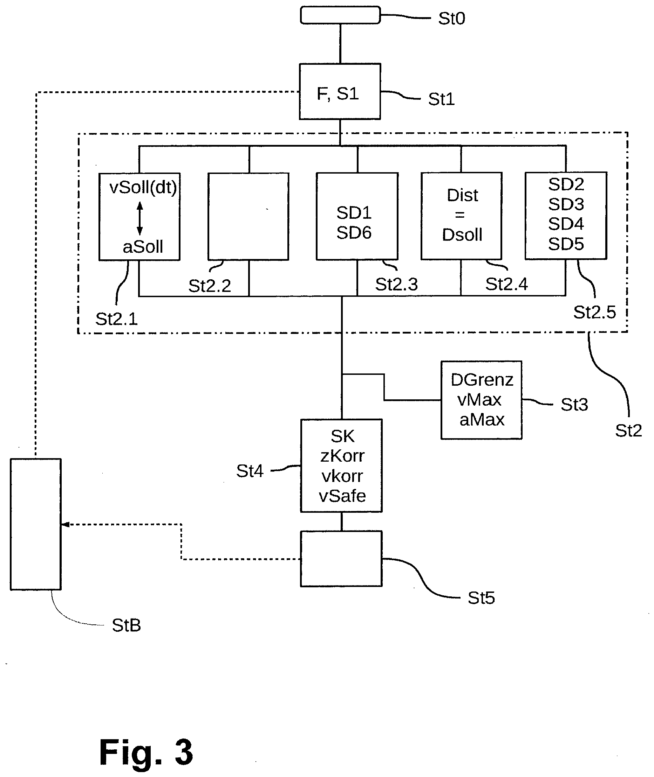

Gemäß Fig. 3 kann das erfindungsgemäße Verfahren beispielsweise wie folgt ausgeführt werden:
In einem anfänglichen Schritt St0 wird das Bremssystem 100 initialisiert, beispielsweise mit Einschalten einer Zündung oder der Aktivierung des automatisierten Fahrtbetriebs. In einem ersten Schritt St1 wird von der dritten Steuereinrichtung 130 in Abhängigkeit einer geplanten Fahrzeugbewegung F ein Anforderungs-Signal S1 mit Anforderungen aSoll, vSoll, RSoll, LSoll an den CAN-Bus 60 ausgegeben.

In einem zweiten Schritt St2 wird das Anforderung-Signal S1 von der Überwachungseinrichtung 140 plausibilisiert, wobei dazu in einem Teilschritt St2.1 eine zeitliche Veränderung dt der angeforderten Fahrzeug-Soll-Geschwindigkeit vSoll mit der angeforderten Fahrzeug-Soll-Beschleunigung aSoll verglichen wird. Weiterhin kann in einem Teilschritt St2.2 zur Plausibilisierung überprüft werden, ob die Anforderungen aSoll, vSoll, RSoll, LSoll monoton sind, d.h. ob diese Sprünge aufweisen oder nicht. In einem weiteren Teilschritt St2.3 kann überprüft werden, ob ein Übertragungsfehler von der dritten Steuereinrichtung 130 und/oder auf die erste Steuereinrichtung 110 vorliegt, d. h. das Anforderungs-Signal S1 kann nicht oder nicht vollständig über den CAN-Bus 60 übertragen werden, weil beispielsweise die dritte Steuereinrichtung 130 einen Defekt aufweist oder ausgefallen ist oder die erste Steuereinrichtung 110 keine Anforderungs-Signale S1 mehr empfängt, was über das Diagnose-Signal SD1 oder SD6 übermittelt werden kann.

In einem weiteren Teilschritt St2.4 kann die Fahrzeug-Soll-Längsdynamik DSoll mit der Fahrzeug-Ist-Längsdynamik DIst verglichen werden und in einem dritten Schritt St3 zusätzliche Längsdynamik-Grenzwerte DGrenz herangezogen werden, um zu überprüfen, ob die Fahrzeug-Ist-Längsdynamik Dlst einen sicheren automatisierten Betrieb gewährleisten kann. In einem weiteren Teilschritt St2.5 wird geprüft, ob die Aktuatoren 1, 50, 51, 52, 53 einen Defekt aufweisen, wobei dazu das in einer Eigendiagnose erstellte Diagnose-Signal SD2, SD3, SD4, SD5 des jeweiligen Aktuators 1, 50, 51, 52, 54 herangezogen wird.

In einem vierten Schritt St4 wird in Abhängigkeit der Plausibilisierung im Schritt St2 und St3 eine Korrektur-Verzögerung zKorr und/oder eine Korrektur-Geschwindigkeit vKorr ermittelt und über das Korrektur-Signal SK an die zweite Steuereinrichtung 120 übermittelt, die daraufhin in einem fünften Schritt St5 korrigierend eine Bremsung veranlasst. Parallel zu den Schritten St2 bis St5 kann bereits eine Bremsung StB über die Radbremsen 1 erfolgen, beispielsweise vorgegeben durch die erste oder die zweite Steuereinrichtung 110, 120. In diese Bremsung wird im Schritt St5 korrigierend eingegriffen.

### Bezugszeichenliste (Bestandteil der Beschreibung)

- 1: Radbremsen
- 2: Räder des Nutzfahrzeuges 200
- 3: Fahrzeugachse/Vorderachse
- 4: ABS-Bremsventil
- 10: Steuerventil
- 20: Redundanzanordnung
- 21: (erstes) Redundanzventil
- 22: zweites Redundanzventil/Parkbremsventil
- 30: redundanter Geschwindigkeitssensor
- 30a: Geschwindigkeitssensor
- 40: Fußbremsventil
- 50: Motor
- 51: Lenkung
- 52: Getriebe
- 53: Dauerbremse
- 60: CAN-Bus
- 70: Motor-Abschalteinrichtung
- 100: pneumatisches Bremssystem
- 110: erste Steuereinrichtung
- 120: zweite Steuereinrichtung
- 130: dritte Steuereinrichtung
- 140: Überwachungseinrichtung
- 200: Nutzfahrzeug

- alst: Fahrzeug-Ist-Beschleunigung
- aMax: Maximalbeschleunigung
- aSoll: Fahrzeug-Soll-Beschleunigung
- DIst: Fahrzeug-Ist-Längsdynamik
- DSoll: Fahrzeug-Soll-Längsdynamik
- dt: Zeitraum
- L: Lenkwinkel
- LSoll: Fahrzeug-Soll-Lenkwinkel
- pA: Radbrems-Bremsdruck
- pPB: Parkbrems-Bremsdruck
- pR: Redundanz-Steuerdruck
- R: Richtung
- Rist: Fahrzeug-Ist-Richtung
- RSoll: Fahrzeug-Soll-Richtung
- S1: Anforderungs-Signal
- S2: Fahrer-Signal
- SA: Steuerventil-Steuersignal
- SD1, SD2, SD3, SD4, SD5, SD6: Diagnose-Signale
- SK: Korrektur-Signal
- SR: Redundanz-Signal
- T: Toleranz
- vlst: Fahrzeug-Ist-Geschwindigkeit
- vMax: Maximalgeschwindigkeit
- vSoll: Fahrzeug-Soll-Geschwindigkeit
- x: Längsrichtung
- zPB: Parkbrems-Vorgabe
- St1, St2, St2.1, St2.2, St2.3, St2.4, St2.5, St3, St4, St5: Schritte des Verfahrens

## Patentansprüche

1. Verfahren zum automatisierten elektronischen Steuern eines Bremssystems (100) in einem Fahrzeug (200), insbesondere Nutzfahrzeug (200), mit mindestens den folgenden Schritten:
- Einlesen eines Anforderungs-Signals (S1) zum automatisierten elektronischen Ansteuern von Aktuatoren (1, 50, 52, 53) in dem Fahrzeug (200), wobei mindestens einer der Aktuatoren (1, 50, 52, 53) einen Einfluss auf eine Fahrzeug-Ist-Längsdynamik (DIst) des Fahrzeuges (200) hat und über das Anforderungs-Signal (S1) von den Aktuatoren (1, 50, 52, 53) umzusetzende Anforderungen (aSoll, vSoll, RSoll) zum Bewirken einer automatisiert angeforderten Fahrzeug-Soll-Längsdynamik (DSoll) übertragen werden (St1);
**gekennzeichnet durch**
- Plausibilisieren des Anforderungs-Signals (S1) zum Feststellen, ob die Anforderungen (aSoll, vSoll, RSoll) zum Bewirken der automatisiert angeforderten Fahrzeug-Soll-Längsdynamik (DSoll) von den Aktuatoren (1, 50, 52, 53) vollständig oder fehlerfrei unter Berücksichtigung einer Toleranz (T) umgesetzt werden oder werden können (St2);
- Ermitteln einer Korrektur-Verzögerung (zKorr) und/oder eine Korrektur-Geschwindigkeit (vKorr), falls eine Umsetzung mindestens einer der Anforderungen (aSoll, vSoll, RSoll) unter Berücksichtigung der Toleranz (T) nicht vollständig oder fehlerfrei erfolgt ist oder erfolgen kann, zur Vorgabe einer korrigierenden Bremsung, wobei die Korrektur-Verzögerung (zKorr) und/oder die Korrektur-Geschwindigkeit (vKorr) in Abhängigkeit der nicht vollständig oder fehlerfrei umgesetzten oder umsetzbaren Anforderung (aSoll, vSoll, RSoll) festgelegt werden (St4);
- Anfordern der korrigierenden Bremsung des Fahrzeuges (200) in Abhängigkeit der Korrektur-Verzögerung (zKorr) und/oder der Korrektur-Geschwindigkeit (vKorr) zum Überführen des Fahrzeuges (200) in einen sicheren Zustand (St5).

2. Verfahren nach Anspruch 1, **dadurch gekennzeichnet, dass** das Anforderungs-Signal (S1) plausibilisiert wird, indem die Fahrzeug-Ist-Längsdynamik (DIst) mit der durch das Anforderungs-Signal (S1) automatisiert vorgegebenen Fahrzeug-Soll-Längsdynamik (DSoll) verglichen wird (St2.4), wobei dazu eine Fahrzeug-Ist-Beschleunigung (alst) mit einer Fahrzeug-Soll-Beschleunigung (aSoll) und/oder eine Fahrzeug-Ist-Geschwindigkeit (vlst) mit einer Fahrzeug-Soll-Geschwindigkeit (vSoll) und/oder eine Fahrzeug-Ist-Richtung (Rist) mit einer Fahrzeug-Soll-Richtung (RSoll) verglichen wird.

3. Verfahren nach Anspruch 2, **dadurch gekennzeichnet, dass** die Fahrzeug-Ist-Richtung (Rist) und die Fahrzeug-Soll-Richtung (RSoll) dadurch vorgegeben werden, ob die Fahrzeug-Ist-Geschwindigkeit (vlst) bzw. die Fahrzeug-Soll-Geschwindigkeit (vSoll) größer oder kleiner als Null sind.

4. Verfahren nach Anspruch 2 oder 3, **dadurch gekennzeichnet, dass** bei einer ausgleichbaren Abweichung zwischen der Fahrzeug-Ist-Längsdynamik (DIst) und der Fahrzeug-Soll-Längsdynamik (DSoll) und somit einer unvollständigen oder fehlerhaften Umsetzung der automatisiert vorgegebenen Anforderungen (aSoll, vSoll, RSoll) eine diese Abweichung ausgleichende Korrektur-Verzögerung (zKorr) und/oder eine diese Abweichung ausgleichende Korrektur-Geschwindigkeit (vKorr) ermittelt und ausgegeben werden.

5. Verfahren nach Anspruch 2 oder 3, **dadurch gekennzeichnet, dass** bei einer nicht ausgleichbaren Abweichung zwischen der Fahrzeug-Ist-Längsdynamik (Dlst) und der Fahrzeug-Soll-Längsdynamik (DSoll) und somit einer unvollständigen oder fehlerhaften Umsetzung der automatisiert vorgegebenen Anforderungen (aSoll, vSoll, RSoll) eine Korrektur-Geschwindigkeit (vKorr) und/oder eine Korrektur-Verzögerung (zKorr) ermittelt und ausgegeben werden, aufgrund dessen das Fahrzeug (200) in den Stillstand oder auf eine Sicherheits-Geschwindigkeit (vSafe), beispielsweise 60 km/h, abgebremst wird.

6. Verfahren nach Anspruch 5, **dadurch gekennzeichnet, dass** die Abbremsung in den Stillstand oder auf die Sicherheits-Geschwindigkeit (vSafe) mit einer Korrektur-Verzögerung (zKorr) von zwischen -2m/s² und -4m/s², vorzugsweise -3,5m/s², erfolgt.

7. Verfahren nach einem der vorhergehenden Ansprüche, **dadurch gekennzeichnet, dass** die Korrektur-Verzögerung (zKorr) und/oder die Korrektur-Geschwindigkeit (vKorr) lediglich dann ausgegeben werden, wenn kein ABS-Regeleingriff erkannt wurde.

8. Verfahren nach einem der vorhergehenden Ansprüche, **dadurch gekennzeichnet, dass** zum Plausibilisieren des Anforderungs-Signals (S1) festgestellt wird, ob die automatisiert vorgegebenen Anforderungen (aSoll, vSoll, RSoll) von denjenigen Aktuatoren (50, 52, 53) vollständig oder fehlerfrei umgesetzt werden oder umsetzbar sind, die einen positive Fahrzeug-Soll-Beschleunigung (aSoll) bewirken und/oder über die eine Fahrzeug-Soll-Richtung (RSoll) eingestellt wird.

9. Verfahren nach Anspruch 8, **dadurch gekennzeichnet, dass** überwacht wird, ob aufgrund einer angeforderten positiven Fahrzeug-Soll-Beschleunigung (aSoll) eine entsprechend betragsmäßig höhere Fahrzeug-Soll-Geschwindigkeit (vSoll) und/oder durch eine angeforderte ansteigende Fahrzeug-Soll-Geschwindigkeit (vSoll) eine entsprechend positive Fahrzeug-Soll-Beschleunigung (aSoll) und/oder eine angeforderte Fahrzeug-Soll-Richtung (RSoll) umgesetzt werden oder umgesetzt werden können zum Feststellen, ob eine vollständige oder fehlerfreie Umsetzung der automatisiert vorgegebenen Fahrzeug-Soll-Dynamik (DSoll) erfolgt oder erfolgen könnte .

10. Verfahren nach einem der vorhergehenden Ansprüche, **dadurch gekennzeichnet, dass** das Anforderungs-Signal (S1) in Abhängigkeit davon plausibilisiert wird, ob ein Übertragungsfehler, beispielsweise bei der Übertragung des Anforderungs-Signals (S1) über einen CAN-Bus (60), an die Aktuatoren (1, 50, 52, 53) festgestellt wurde (St2.3),
wobei bei einem Feststellen eines Übertragungsfehlers und somit einer unvollständig oder fehlerhaft umsetzbaren, automatisiert vorgegebenen Anforderung (aSoll, vSoll, RSoll) eine Korrektur-Geschwindigkeit (vKorr) und/oder eine Korrektur-Verzögerung (zKorr) ermittelt und ausgegeben wird, aufgrund derer das Fahrzeug (200) in den Stillstand oder auf eine Sicherheits-Geschwindigkeit (vSafe), beispielsweise 60 km/h, abgebremst wird.

11. Verfahren nach Anspruch 10, **dadurch gekennzeichnet, dass** ein Übertragungsfehler über ein Diagnose-Signal (SD1, SD6) an die Überwachungseinrichtung (140) übertragen wird, wobei ein Übertragungsfehler auf die erste Steuereinrichtung (110) und/oder von der dritten Steuereinrichtung (130) in einer Eigendiagnose festgestellt wird (St2.3)

12. Verfahren nach einem der vorhergehenden Ansprüche, **dadurch gekennzeichnet, dass** das Anforderungs-Signal (S1) in Abhängigkeit davon plausibilisiert wird, ob die über das Anforderungs-Signal (S1) übertragenen Anforderungen (aSoll, vSoll, RSoll) zum automatisierten Ansteuern des Fahrzeuges (200) monoton sind (St2.2),
wobei bei Feststellen, dass die Anforderungen (aSoll, vSoll, RSoll) zum automatisierten Ansteuern des Fahrzeuges (200) nicht monoton sind und somit eine unvollständig oder fehlerhaft umsetzbare, automatisiert vorgegebene Anforderung (aSoll, vSoll, RSoll) vorliegt, eine Korrektur-Geschwindigkeit (vKorr) und/oder eine Korrektur-Verzögerung (zKorr) ermittelt und ausgegeben wird, aufgrund dessen das Fahrzeug (200) in den Stillstand oder auf eine Sicherheits-Geschwindigkeit (vSafe), beispielsweise 60 km/h, abgebremst wird.

13. Verfahren nach einem der vorhergehenden Ansprüche, **dadurch gekennzeichnet, dass** das Anforderungs-Signal (S1) in Abhängigkeit davon plausibilisiert wird, ob eine zeitliche Veränderung (dt) einer angeforderten Fahrzeug-Soll-Geschwindigkeit (vSoll) mit einer angeforderten, vorzugsweise positiven, Fahrzeug-Soll-Beschleunigung (aSoll) übereinstimmt (St2.1),
wobei bei Feststellen einer Abweichung und somit einer unvollständig oder fehlerhaft umsetzbaren, automatisiert vorgegebenen Anforderung (aSoll, vSoll) eine Korrektur-Geschwindigkeit (vKorr) und/oder eine Korrektur-Verzögerung (zKorr) ermittelt und ausgegeben wird, aufgrund dessen das Fahrzeug (200) in den Stillstand oder auf eine Sicherheits-Geschwindigkeit (vSafe), beispielsweise 60km/h, abgebremst wird.

14. Verfahren nach einem der vorhergehenden Ansprüche, **dadurch gekennzeichnet, dass** das Anforderungs-Signal (S1) in Abhängigkeit davon plausibilisiert wird, ob einer der Aktuatoren (1, 50, 52, 53) einen Defekt aufweist,
wobei bei Feststellen eines Defekts und somit einer unvollständig oder fehlerhaft umsetzbaren, automatisiertvorgegebenen Anforderung (aSoll, vSoll, RSoll) eine Korrektur-Geschwindigkeit (vKorr) und/oder eine Korrektur-Verzögerung (zKorr) ermittelt und ausgegeben wird, aufgrund dessen das Fahrzeug (200) in den Stillstand oder auf eine Sicherheits-Geschwindigkeit (vSafe), beispielsweise 60km/h, abgebremst wird.

15. Verfahren nach Anspruch 14, **dadurch gekennzeichnet, dass** ein Defekt in den Aktuatoren (1, 50, 52, 53) über ein Diagnose-Signal (SD2, SD4, SD5) übertragen wird, wobei ein Defekt in dem jeweiligen Aktuator (1, 50, 52, 53) in einer Eigendiagnose festgestellt wird (St2.5).

16. Verfahren nach einem der vorhergehenden Ansprüche, **dadurch gekennzeichnet, dass** bei der Bestimmung der Korrektur-Verzögerung (zKorr) und/oder der Korrektur-Geschwindigkeit (vKorr) Längsdynamik-Grenzwerte (DGrenz), beispielsweise eine Maximalgeschwindigkeit (vMax) und/oder eine Maximalbeschleunigung (aMax), berücksichtigt werden (St3).

17. Verfahren nach einem der vorhergehenden Ansprüche, **dadurch gekennzeichnet, dass** bei Feststellen einer fehlerhaften oder unvollständigen Umsetzung der automatisiert vorgegebenen Anforderungen (aSoll, vSoll, RSoll) eine automatisiert angeforderte Bremsung (110, 120) durch die Korrektur-Verzögerung (zKorr) und/oder die Korrektur-Geschwindigkeit (vKorr) übersteuert wird.

18. Verfahren nach einem der vorhergehenden Ansprüche, **dadurch gekennzeichnet, dass** die korrigierende Bremsung (St5) über eine im Fahrzeug (200) ausgebildete Redundanzanordnung (20) erfolgt, die ausgebildet ist, das Fahrzeug (200) redundant abzubremsen.

19. Verfahren nach Anspruch 18, **dadurch gekennzeichnet, dass** das Fahrzeug (200) von der Redundanzanordnung (20) elektronisch-pneumatisch über Radbremsen (1) abgebremst werden kann, wenn eine elektronische Ansteuerung der Radbremsen (1) über eine erste Steuereinrichtung (110) oder das elektronisch steuerbare pneumatische Bremssystem (100) fehlschlägt, zum Ausbilden einer elektronisch-pneumatisch gesteuerten Redundanz.

20. Verfahren nach einem der vorhergehenden Ansprüche, **dadurch gekennzeichnet, dass** die Fahrzeug-Ist-Längsdynamik (DIst) plausibilisiert wird, beispielsweise durch redundante Raddrehzahlsensoren (30a)

21. Verfahren nach einem der vorhergehenden Ansprüche, **dadurch gekennzeichnet, dass** ergänzend auch ein automatisiert angeforderter Fahrzeug-Soll-Lenkwinkel (LSoll) plausibilisiert wird, wobei der Überwachungseinrichtung (140) über ein drittes Diagnose-Signal (SD3) gemeldet wird, ob eine automatisierte Lenkung (51) einen Defekt aufweist und damit ob eine unvollständige oder fehlerhafte Umsetzung des automatisiert angeforderten Fahrzeug-Soll-Lenkwinkels (LSoll) vorliegt oder vorliegen kann.

22. Elektronisch steuerbares pneumatisches Bremssystem (100) zur Durchführung des Verfahrens nach einem der vorhergehenden Ansprüche, mindestens aufweisend:
eine erste Steuereinrichtung (110), die ausgebildet ist, in Abhängigkeit einer automatisiert vorgegebenen Fahrzeug-Soll-Beschleunigung (aSoll) und/oder einer automatisiert vorgegebenen Fahrzeug-Soll-Geschwindigkeit (vSoll) über mindestens ein zumindest elektronisch steuerbares Steuerventil (10) Radbrems-Bremsdrücke (pA) an Radbremsen (1) des Fahrzeuges (200) auszusteuern zum elektronisch gesteuerten Abbremsen des Fahrzeuges (200) in einem automatisierten Normalbetrieb, und
eine Redundanzanordnung (20) mit mindestens einem Redundanzventil (21, 22) und einer das mindestens eine Redundanzventil (21, 22) steuernden zweiten Steuereinrichtung (120), wobei die Redundanzanordnung (20) ausgebildet ist, über das Redundanzventil (21, 22) in Abhängigkeit der automatisiert vorgegebenen Fahrzeug-Soll-Beschleunigung (aSoll) und/oder der automatisiert vorgegebenen Fahrzeug-Soll-Geschwindigkeit (vSoll) eine redundante Bremsung über die Radbremsen (1) anzufordern wenn eine elektronische Ansteuerung der Radbremsen (1) über die erste Steuereinrichtung (110)
fehlschlägt, zum Ausbilden einer elektronisch-pneumatisch gesteuerten Redundanz, **dadurch gekennzeichnet, dass**
weiterhin eine Überwachungseinrichtung (140) vorgesehen ist, die ausgebildet ist, ein von einer dritten Steuereinrichtung (130) automatisiert vorgegebenes Anforderungs-Signal (S1) zum automatisierten Ansteuern von Aktuatoren (1, 50, 52, 53) in dem Fahrzeug (200) zu plausibilisieren zum Feststellen, ob über das Anforderungs-Signal (S1) übertragene Anforderungen (aSoll, vSoll, RSoll) fehlerfrei oder vollständig umgesetzt werden oder werden können,
wobei in Abhängigkeit der Plausibilisierung von der Überwachungseinrichtung (140) eine Korrektur-Verzögerung (zKorr) und/oder eine Korrektur-Geschwindigkeit (vKorr) ermittelbar und über ein Korrektur-Signal (SK) an die Redundanzanordnung (20) ausgebbar ist zum Bewirken einer redundanten, korrigierenden Bremsung durch die Radbremsen (1) zum Überführen des Fahrzeuges (200) in einen sicheren Zustand.

23. Elektronisch steuerbares Bremssystem (100) nach Anspruch 22, **dadurch gekennzeichnet, dass** dem Steuerventil (10) von der ersten Steuereinrichtung (110) eine elektronische Bremsanforderung (SA) und von der Redundanzanordnung (20) im Redundanzfall eine pneumatische Bremsanforderung (pR) vorgebbar ist.

24. Elektronisch steuerbares Bremssystem (100) nach Anspruch 22 oder 23, **dadurch gekennzeichnet, dass** das mindestens eine Redundanzventil (21, 22) ein Drucksteuerventil (21) und/oder ein Parkbremsventil (22) ist.

25. Elektronisch steuerbares Bremssystem (100) nach einem der Ansprüche 22 bis 24, **dadurch gekennzeichnet, dass** die Überwachungseinrichtung (140) in der zweiten Steuereinrichtung (120) integriert ist.

26. Fahrzeug (200), insbesondere Nutzfahrzeug (200), mit einem elektronisch gesteuerten pneumatischen Bremssystem (100) nach einem der Ansprüche 22 bis 25, zur Durchführung eines Verfahrens nach einem der Ansprüche 1 bis 21, sowie einem Regelsystem (130) zur automatisierten Ansteuerung von Aktuatoren (1, 50, 51, 52, 53) des Fahrzeuges (200) über die dritte Steuereinrichtung (130).

## Claims

1. Method for electronically controlling, in an automated manner, a brake system (100) in a vehicle (200), in particular a utility vehicle (200), comprising at least the following steps:
- reading-in a request signal (S1) to electronically actuate, in an automated manner, actuators (1, 50, 52, 53) in the vehicle (200), wherein at least one of the actuators (1, 50, 52, 53) has an influence on actual longitudinal vehicle dynamics (DIst) of the vehicle (200), and requests (aSoll, vSoll, RSoll) to bring about automatically requested target longitudinal vehicle dynamics (DSoll), which are to be implemented by the actuators (1, 50, 52, 53), are transmitted via the request signal (S1) (St1);
**characterised by**:
- checking the plausibility of the request signal (S1) in order to ascertain whether the requests (aSoll, vSoll, RSoll) to bring about the automatically requested target longitudinal vehicle dynamics (DSoll) are being or can be completely or correctly implemented by the actuators (1, 50, 52, 53), taking into account a tolerance (T) (St2);
- determining a correction deceleration (zKorr) and/or a correction speed (vKorr) if an implementation of at least one of the requests (aSoll, vSoll, RSoll) has not taken place or cannot take place completely or correctly, taking into account the tolerance (T), in order to specify corrective braking, the correction deceleration (zKorr) and/or the correction speed (vKorr) being defined as a function of the request (aSoll, vSoll, RSoll) that has not been or cannot be implemented completely or correctly (St4);
- requesting the corrective braking of the vehicle (200) as a function of the correction deceleration (zKorr) and/or the correction speed (vKorr) so as to bring the vehicle (200) into a safe state (St5).

2. Method according to claim 1, **characterized in that** the plausibility of the request signal (S1) is checked by comparing the actual longitudinal vehicle dynamics (DIst) with the target longitudinal vehicle dynamics (DSoll) that have been specified in an automated manner by the request signal (S1) (St2.4), wherein to this end an actual vehicle acceleration (aIst) is compared with a target vehicle acceleration (aSoll) and/or an actual vehicle speed (vIst) is compared with a target vehicle speed (vSoll) and/or an actual vehicle direction (RIst) is compared with a target vehicle direction (RSoll).

3. Method according to claim 2, **characterized in that** the actual vehicle direction (RIst) and the target vehicle direction (RSoll) are specified on the basis of whether the actual vehicle speed (vIst) and the target vehicle speed (vSoll) are greater than or less than zero.

4. Method according to claim 2 or 3, **characterized in that**, in the event of a compensable deviation between the actual longitudinal vehicle dynamics (DIst) and the target longitudinal vehicle dynamics (DSoll) and therefore an incomplete or incorrect implementation of the automatically specified requests (aSoll, vSoll, RSoll), a correction deceleration (zKorr) that compensates for this deviation and/or a correction speed (vKorr) that compensates for this deviation are determined and output.

5. Method according to claim 2 or 3, **characterized in that**, in the event of a non-compensable deviation between the actual longitudinal vehicle dynamics (DIst) and the target longitudinal vehicle dynamics (DSoll) and therefore an incomplete or incorrect implementation of the automatically specified requests (aSoll, vSoll, RSoll), a correction speed (vKorr) and/or a correction deceleration (zKorr) are determined and output, on the basis of which the vehicle (200) is braked to a standstill or to a safe speed (vSafe), for example 60 km/h.

6. Method according to claim 5, **characterized in that** the braking to a standstill or to the safe speed (vSafe) takes place at a correction deceleration (zKorr) of between -2 m/s² and - 4 m/s², preferably -3.5 m/s².

7. Method according to any one of the preceding claims, **characterized in that** the correction deceleration (zKorr) and/or the correction speed (vKorr) are output only when no ABS control intervention has been detected.

8. Method according to any one of the preceding claims, **characterized in that**, in order to check the plausibility of the request signal (S1), it is ascertained whether the automatically specified requests (aSoll, vSoll, RSoll) are being or can be implemented completely or correctly by those actuators (50, 52, 53) which effect a positive target vehicle acceleration (aSoll) and/or via which a target vehicle direction (RSoll) is set.

9. Method according to claim 8, **characterized in that** it is monitored whether a correspondingly higher target vehicle speed (vSoll) is being or can be implemented on the basis of a requested positive target vehicle acceleration (aSoll), and/or a correspondingly positive target vehicle acceleration (aSoll) and/or a requested target vehicle direction (RSoll) is being or can be implemented due to a requested increasing target vehicle speed (vSoll), in order to ascertain whether a complete or correct implementation of the automatically specified target vehicle dynamics (DSoll) is taking place or could take place.

10. Method according to any one of the preceding claims, **characterized in that** the plausibility of the request signal (S1) is checked as a function of whether a transmission error has been identified, for example during the transmission of the request signal (S1) via a CAN bus (60) to the actuators (1, 50, 52, 53) (St2.3),
wherein, if a transmission error and therefore an incompletely or incorrectly implementable automatically specified request (aSoll, vSoll, RSoll) is identified, a correction speed (vKorr) and/or a correction deceleration (zKorr) is determined and output, on the basis of which the vehicle (200) is braked to a standstill or to a safe speed (vSafe), for example 60 km/h.

11. Method according to claim 10, **characterized in that** a transmission error is transmitted to the monitoring device (140) via a diagnostic signal (SD1, SD6), a transmission error on the first control device (110) and/or from the third control device (130) being identified in a self-diagnosis procedure (St2.3).

12. Method according to any one of the preceding claims, **characterized in that** the plausibility of the request signal (S1) is checked as a function of whether the requests (aSoll, vSoll, RSoll) to actuate the vehicle (200) in an automated manner, which are transmitted via the request signal (S1), are monotonous (St2.2),
wherein, if it is ascertained that the requests (aSoll, vSoll, RSoll) to actuate the vehicle (200) in an automated manner are not monotonous and therefore an incompletely or incorrectly implementable automatically specified request (aSoll, vSoll, RSoll) is identified, a correction speed (vKorr) and/or a correction deceleration (zKorr) is determined and output, on the basis of which the vehicle (200) is braked to a standstill or to a safe speed (vSafe), for example 60 km/h.

13. Method according to any one of the preceding claims, **characterized in that** the plausibility of the request signal (S1) is checked as a function of whether a change over time (dt) of a requested target vehicle speed (vSoll) corresponds to a requested, preferably positive, target vehicle acceleration (aSoll) (St2.1),
wherein, if a deviation and therefore an incompletely or incorrectly implementable automatically specified request (aSoll, vSoll) is identified, a correction speed (vKorr) and/or a correction deceleration (zKorr) is determined and output, on the basis of which the vehicle (200) is braked to a standstill or to a safe speed (vSafe), for example 60 km/h.

14. Method according to any one of the preceding claims, **characterized in that** the plausibility of the request signal (S1) is checked as a function of whether one of the actuators (1, 50, 52, 53) has a defect,
wherein, if a defect and therefore an incompletely or incorrectly implementable automatically specified request (aSoll, vSoll, RSoll) is identified, a correction speed (vKorr) and/or a correction deceleration (zKorr) is determined and output, on the basis of which the vehicle (200) is braked to a standstill or to a safe speed (vSafe), for example 60 km/h.

15. Method according to claim 14, **characterized in that** a defect in the actuators (1, 50, 52, 53) is transmitted via a diagnostic signal (SD2, SD4, SD5), a defect in the respective actuator (1, 50, 52, 53) being identified in a self-diagnosis procedure (St2.5).

16. Method according to any one of the preceding claims, **characterized in that**, when determining the correction deceleration (zKorr) and/or the correction speed (vKorr), longitudinal dynamics limit values (DGrenz) are taken into account, for example a maximum speed (vMax) and/or a maximum acceleration (aMax) (St3).

17. Method according to any one of the preceding claims, **characterized in that**, if an incorrect or incomplete implementation of the automatically specified requests (aSoll, vSoll, RSoll) is identified, an automatically requested braking (110, 120) is overridden by the correction deceleration (zKorr) and/or the correction speed (vKorr).

18. Method according to any one of the preceding claims, **characterized in that** the corrective braking (St5) takes place via a redundancy arrangement (20) formed in the vehicle (200), which is designed to redundantly brake the vehicle (200).

19. Method according to claim 18, **characterized in that** the vehicle (200) can be braked by the redundancy arrangement (20) in an electronic/pneumatic manner via wheel brakes (1) if an electronic actuation of the wheel brakes (1) via a first control device (110) or the electronically controllable pneumatic brake system (100) fails, in order to create an electronically/pneumatically controlled redundancy.

20. Method according to any one of the preceding claims, **characterized in that** the plausibility of the actual longitudinal vehicle dynamics (DIst) is checked, for example by redundant wheel speed sensors (30a).

21. Method according to any one of the preceding claims, **characterized in that**, in addition, the plausibility of an automatically requested target vehicle steering angle (LSoll) is also checked, it being reported to the monitoring device (140) via a third diagnostic signal (SD3) whether an automated steering (51) has a defect and therefore whether there is or may be incomplete or incorrect implementation of the automatically requested target vehicle steering angle (LSoll).

22. Electronically controllable pneumatic brake system (100) for carrying out the method according to any one of the preceding claims, comprising at least:
a first control device (110) which is designed to control wheel-brake brake pressures (pA) on wheel brakes (1) of the vehicle (200) via at least one at least electronically controllable control valve (10) as a function of an automatically specified target vehicle acceleration (aSoll) and/or an automatically specified target vehicle speed (vSoll), in order to brake the vehicle (200) in an electronically controlled manner in automated normal operation, and
a redundancy arrangement (20) having at least one redundancy valve (21, 22) and a second control device (120) which controls the at least one redundancy valve (21, 22), the redundancy arrangement (20) being designed to request, via the redundancy valve (21, 22) and as a function of the automatically specified target vehicle acceleration (aSoll) and/or the automatically specified target vehicle speed (vSoll), a redundant braking via the wheel brakes (1) if an electronic actuation of the wheel brakes (1) via the first control device (110) fails, in order to create an electronically/pneumatically controlled redundancy,
**characterized in that**
a monitoring device (140) is further provided, which is designed to check the plausibility of a request signal (S1) to actuate actuators (1, 50, 52, 53) in the vehicle (200) in an automated manner, which is specified in an automated manner by a third control device (130), in order to ascertain whether requests (aSoll, vSoll, RSoll) transmitted via the request signal (S1) are being or can be implemented corrected or completely,
wherein, as a function of the plausibility check by the monitoring device (140), a correction deceleration (zKorr) and/or a correction speed (vKorr) can be determined and can be output to the redundancy arrangement (20) via a correction signal (SK) in order to effect redundant, corrective braking by the wheel brakes (1) so as to bring the vehicle (200) into a safe state.

23. Electronically controllable brake system (100) according to claim 22, **characterized in that** an electronic braking request (SA) can be specified to the control valve (10) by the first control device (110), and in the redundancy situation a pneumatic braking request (pR) can be specified to the control valve by the redundancy arrangement (20).

24. Electronically controllable brake system (100) according to claim 22 or 23, **characterized in that** the at least one redundancy valve (21, 22) is a pressure control valve (21) and/or a parking brake valve (22).

25. Electronically controllable brake system (100) according to any one of claims 22 to 24, **characterized in that** the monitoring device (140) is integrated in the second control device (120).

26. Vehicle (200), in particular a utility vehicle (200), comprising an electronically controlled pneumatic brake system (100) according to any one of claims 22 to 25 for carrying out a method according to any one of claims 1 to 21, and a control system (130) for actuating actuators (1, 50, 51, 52, 53) of the vehicle (200) in an automated manner via the third control device (130) .

## Revendications

1. Procédé pour la commande électronique automatisée d'un système de freinage (100) dans un véhicule (200), en particulier véhicule utilitaire (200), avec au moins les étapes suivantes :
- la lecture d'un signal de demande (S1) pour la commande électronique automatisée d'actionneurs (1, 50, 52, 53) dans le véhicule (200), dans lequel au moins un des actionneurs (1, 50, 52, 53) a une influence sur une dynamique longitudinale réelle de véhicule (DIst) du véhicule (200) et des demandes (aSoll, vSoll, RSoll) destinées à être mises en œuvre par les actionneurs (1, 50, 52, 53) pour provoquer une dynamique longitudinale de consigne de véhicule (DSoll) demandée de manière automatisée sont transmises par l'intermédiaire du signal de demande (S1) (St1) ;
**caractérisé par**
- le contrôle de plausibilité du signal de demande (S1) pour constater si les demandes (aSoll, vSoll, RSoll) pour provoquer la dynamique longitudinale de consigne de véhicule (DSoll) demandée de manière automatisée sont ou peuvent être mises en œuvre par les actionneurs (1, 50, 52, 53) complètement ou sans erreur avec prise en compte d'une tolérance (T) (St2) ;
- la détermination d'une décélération de correction (zKorr) et/ou d'une vitesse de correction (vKorr), au cas où une mise en œuvre d'au moins une des demandes (aSoll, vSoll, RSoll) avec prise en compte de la tolérance (T) ne s'effectuerait ou ne pourrait s'effectuer complètement ou sans erreur, pour prédéfinir un freinage de correction, dans lequel la décélération de correction (zKorr) et/ou la vitesse de correction (vKorr) sont fixées en fonction de la demande (aSoll, vSoll, RSoll) non mise en œuvre ou ne pouvant être mise en œuvre complètement ou sans erreur (St4) ;
- la demande du freinage de correction du véhicule (200) en fonction de la décélération de correction (zKorr) et/ou de la vitesse de correction (vKorr) pour amener le véhicule (200) dans un état sûr (St5).

2. Procédé selon la revendication 1, **caractérisé en ce que** la plausibilité du signal de demande (S1) est contrôlée, du fait que la dynamique longitudinale réelle de véhicule (DIst) est comparée à la dynamique longitudinale de consigne de véhicule (DSoll) prédéfinie de manière automatisée par le signal de demande (S1) (St2.4), dans lequel à cet effet une accélération réelle de véhicule (aIst) est comparée à une accélération de consigne de véhicule (aSoll) et/ou une vitesse réelle de véhicule (vIst) à une vitesse de consigne de véhicule (vSoll) et/ou une direction réelle de véhicule (RIst) à une direction de consigne de véhicule (RSoll).

3. Procédé selon la revendication 2, **caractérisé en ce que** la direction réelle de véhicule (RIst) et la direction de consigne de véhicule (RSoll) sont prédéfinies en conséquence du fait que la vitesse réelle de véhicule (vIst) ou la vitesse de consigne de véhicule (vSoll) sont supérieures ou inférieures à zéro.

4. Procédé selon la revendication 2 ou 3, **caractérisé en ce que** lors d'un écart pouvant être compensé entre la dynamique longitudinale réelle de véhicule (DIst) et la dynamique longitudinale de consigne de véhicule (DSoll) et par conséquent d'une mise en œuvre incomplète ou incorrecte des demandes (aSoll, vSoll, RSoll) prédéfinies de manière automatisée, une décélération de correction (zKorr) compensant cet écart et/ou une vitesse de correction (vKorr) compensant cet écart sont déterminées et délivrées.

5. Procédé selon la revendication 2 ou 3, **caractérisé en ce que** lors d'un écart ne pouvant être compensé entre la dynamique longitudinale réelle de véhicule (DIst) et la dynamique longitudinale de consigne de véhicule (DSoll) et par conséquent d'une mise en œuvre incomplète ou incorrecte des demandes (aSoll, vSoll, RSoll) prédéfinies de manière automatisée, une vitesse de correction (vKorr) et/ou une décélération de correction (zKorr) sont déterminées et délivrées, sur la base desquelles le véhicule (200) est freiné jusqu'à l'arrêt ou une vitesse de sécurité (vSafe), par exemple 60 km/h.

6. Procédé selon la revendication 5, **caractérisé en ce que** le freinage jusqu'à l'arrêt ou la vitesse de sécurité (vSafe) s'effectue avec une décélération de correction (zKorr) comprise entre -2 m/s² et -4 m/s², de préférence -3,5 m/s².

7. Procédé selon l'une quelconque des revendications précédentes, **caractérisé en ce que** la décélération de correction (zKorr) et/ou la vitesse de correction (vKorr) ne sont délivrées que lorsqu'aucune intervention de régulation ABS n'a été détectée.

8. Procédé selon l'une quelconque des revendications précédentes, **caractérisé en ce que** pour contrôler la plausibilité du signal de demande (SI), il est constaté si les demandes (aSoll, vSoll, RSoll) prédéfinies de manière automatisée sont mises en œuvre ou peuvent être mises en œuvre complètement ou sans erreur par les actionneurs (50, 52, 53) qui provoquent une accélération de consigne de véhicule (aSoll) positive et/ou par l'intermédiaire desquels une direction de consigne de véhicule (RSoll) est réglée.

9. Procédé selon la revendication 8, **caractérisé en ce qu'**il est surveillé si en raison d'une accélération de consigne de véhicule (aSoll) positive demandée, une vitesse de consigne de véhicule (vSoll) plus élevée de manière correspondante en termes de valeur et/ou du fait d'une vitesse de consigne de véhicule (vSoll) croissante demandée une accélération de consigne de véhicule (aSoll) positive de manière correspondante et/ou une direction de consigne de véhicule (RSoll) demandée sont mises ou œuvre ou peuvent être mises en œuvre pour constater si une mise en œuvre complète ou sans erreur de la dynamique de consigne de véhicule (DSoll) prédéfinie de manière automatisée s'effectue ou pourrait s'effectuer.

10. Procédé selon l'une quelconque des revendications précédentes, **caractérisé en ce que** la plausibilité du signal de demande (S1) est contrôlée selon qu'une erreur de transmission, par exemple lors de la transmission du signal de demande (S1) par l'intermédiaire d'un bus CAN (60), aux actionneurs (1, 50, 52, 53) a été constatée (St2.3),
dans lequel lors d'une constatation d'une erreur de transmission et par conséquent d'une demande (aSoll, vSoll, RSoll) prédéfinie de manière automatisée, pouvant être mise en œuvre de manière incomplète ou incorrecte, une vitesse de correction (vKorr) et/ou une décélération de correction (zKorr) est déterminée et délivrée, en raison de laquelle le véhicule (200) est freiné jusqu'à l'arrêt ou une vitesse de sécurité (vSafe), par exemple 60 km/h.

11. Procédé selon la revendication 10, **caractérisé en ce qu'**une erreur de transmission est transmise par l'intermédiaire d'un signal de diagnostic (SD1, SD6) au dispositif de surveillance (140), dans lequel une erreur de transmission au premier dispositif de commande (110) et/ou par le troisième dispositif de commande (130) est constatée dans un autodiagnostic (St2.3).

12. Procédé selon l'une quelconque des revendications précédentes, **caractérisé en ce que** la plausibilité du signal de demande (S1) est contrôlée selon que les demandes (aSoll, vSoll, RSoll) transmises par l'intermédiaire du signal de demande (S1) pour la commande automatisée du véhicule (200) sont monotones ou non (St2.2),
dans lequel lors de la constatation que les demandes (aSoll, vSoll, RSoll) pour la commande automatisée du véhicule (200) ne sont pas monotones et par conséquent qu'une demande (aSoll, vSoll, RSoll) prédéfinie de manière automatisée, pouvant être mise en œuvre de manière incomplète ou incorrecte, est présente, une vitesse de correction (vKorr) et/ou une décélération de correction (zKorr) est déterminée et délivrée, en raison de laquelle le véhicule (200) est freiné jusqu'à l'arrêt ou une vitesse de sécurité (vSafe), par exemple 60 km/h.

13. Procédé selon l'une quelconque des revendications précédentes, **caractérisé en ce que** la plausibilité du signal de demande (S1) est contrôlée selon qu'une modification temporelle (dt) d'une vitesse de consigne de véhicule (vSoll) demandée concorde ou non avec une accélération de consigne de véhicule (aSoll) demandée, de préférence positive (St2.1),
dans lequel lors de la constatation d'un écart et par conséquent d'une demande (aSoll, vSoll) pouvant être mise en œuvre de manière incomplète ou incorrecte, une vitesse de correction (vKorr) et/ou une décélération de correction (zKorr) est déterminée et délivrée, en raison de laquelle le véhicule (200) est freiné jusqu'à l'arrêt ou à une vitesse de sécurité (vSafe), par exemple 60 km/h.

14. Procédé selon l'une quelconque des revendications précédentes, **caractérisé en ce que** la plausibilité du signal de demande (S1) est contrôlée selon qu'un des actionneurs (1, 50, 52, 53) présente un défaut ou non,
dans lequel lors de la constatation d'un défaut et par conséquent d'une demande (aSoll, vSoll, RSoll) prédéfinie de manière automatisée, pouvant être mise en œuvre de manière incomplète ou incorrecte, une vitesse de correction (vKorr) et/ou une décélération de correction (zKorr) est déterminée et délivrée, en raison desquelles le véhicule (200) est freiné jusqu'à l'arrêt ou une vitesse de sécurité (vSafe), par exemple 60 km/h.

15. Procédé selon la revendication 14, **caractérisé en ce qu'**un défaut dans les actionneurs (1, 50, 52, 53) est transmis par l'intermédiaire d'un signal de diagnostic (SD2, SD4, SD5), dans lequel un défaut dans l'actionneur (1, 50, 52, 53) respectif est constaté dans un autodiagnostic (St2.5).

16. Procédé selon l'une quelconque des revendications précédentes, **caractérisé en ce que** lors de la détermination de la décélération de correction (zKorr) et/ou de la vitesse de correction (vKorr), des valeurs limites de dynamique longitudinale (DGrenz), par exemple une vitesse maximale (vMax) et/ou une décélération maximale (aMax), sont prises en compte (St3).

17. Procédé selon l'une quelconque des revendications précédentes, **caractérisé en ce que** lors de la constatation d'une mise en œuvre incorrecte ou incomplète des demandes (aSoll, vSoll, RSoll) prédéfinies de manière automatisée, un freinage (110, 120) demandé de manière automatisée est surrégulé par la décélération de correction (zKorr) et/ou la vitesse de correction (vKorr).

18. Procédé selon l'une quelconque des revendications précédentes, **caractérisé en ce que** le freinage de correction (St5) s'effectue par l'intermédiaire d'un ensemble de redondance (20) réalisé dans le véhicule (200), qui est réalisé pour freiner le véhicule (200) de manière redondante.

19. Procédé selon la revendication 18, **caractérisé en ce que** le véhicule (200) peut être freiné de manière électronique-pneumatique par l'ensemble de redondance (20) par l'intermédiaire de freins de roue (1), lorsqu'une commande électronique des freins de roue (1) par l'intermédiaire d'un premier dispositif de commande (110) ou du système de freinage pneumatique (100) pouvant être commandé de manière électronique échoue, pour réaliser une redondance commandée de manière électronique-pneumatique.

20. Procédé selon l'une quelconque des revendications précédentes, **caractérisé en ce que** la plausibilité de la dynamique longitudinale réelle de véhicule (DIst) est contrôlée, par exemple par des capteurs de vitesse de roue (30a) redondants.

21. Procédé selon l'une quelconque des revendications précédentes, **caractérisé en ce que** de manière complémentaire la plausibilité d'un angle de braquage de consigne de véhicule (LSoll) demandé de manière automatisée est également contrôlée, dans lequel le dispositif de surveillance (140) est informé par l'intermédiaire d'un troisième signal de diagnostic (SD3) si un braquage automatisé (51) présente un défaut et ainsi si une mise en œuvre incomplète ou incorrecte de l'angle de braquage de consigne de véhicule (LSoll) demandé de manière automatisée est présente ou peut être présente.

22. Système de freinage pneumatique pouvant être commandé de manière électronique (100) pour la mise en œuvre du procédé selon l'une quelconque des revendications précédentes, présentant au moins :
un premier dispositif de commande (110), qui est réalisé pour moduler, en fonction d'une accélération de consigne de véhicule (aSoll) prédéfinie de manière automatisée et/ou d'une vitesse de consigne de véhicule (vSoll) prédéfinie de manière automatisée par l'intermédiaire d'au moins une soupape de commande (10) pouvant être commandée au moins de manière électronique, les pressions de freinage de frein de roue (pA) sur les freins de roue (1) du véhicule (200) pour le freinage commandé de manière électronique du véhicule (200) dans un mode de fonctionnement normal automatisé, et
un ensemble de redondance (20) avec au moins une soupape de redondance (21, 22) et un deuxième dispositif de commande (120) commandant la au moins une soupape de redondance (21, 22), dans lequel l'ensemble de redondance (20) est réalisé pour demander par l'intermédiaire de la soupape de redondance (21, 22) en fonction de l'accélération de consigne de véhicule (aSoll) prédéfinie de manière automatisée et/ou de la vitesse de consigne de véhicule (vSoll) prédéfinie de manière automatisée un freinage redondant par l'intermédiaire des freins de roue (1) lorsqu'une commande électronique des freins de roue (1) par l'intermédiaire du premier dispositif de commande (110) échoue, pour réaliser une redondance commandée de manière électronique-pneumatique,
**caractérisé en ce que**
un dispositif de surveillance (140) est prévu en outre, qui est réalisé pour contrôler la plausibilité d'un signal de demande (S1) prédéfini de manière automatisée par un troisième dispositif de commande (130) pour la commande automatisée d'actionneurs (1, 50, 52, 53) dans le véhicule (200) pour constater si des demandes (aSoll, vSoll, RSoll) transmises par l'intermédiaire du signal de demande (S1) sont ou peuvent être mises en œuvre sans erreur ou complètement,
dans lequel en fonction du contrôle de la plausibilité par le dispositif de surveillance (140) une décélération de correction (zKorr) et/ou une vitesse de correction (vKorr) peut être déterminée et peut être délivrée à l'ensemble de redondance (20) par l'intermédiaire d'un signal de correction (SK) pour provoquer un freinage de correction, redondant, à l'aide des freins de roue (1) pour amener le véhicule (200) dans un état sûr.

23. Système de freinage (100) pouvant être commandé de manière électronique selon la revendication 22, **caractérisé en ce qu'**une demande de freinage électronique (SA) peut être indiquée à la soupape de commande (10) par le premier dispositif de commande (110) et une demande de freinage pneumatique (pR) par l'ensemble de redondance (20) dans le cas d'une redondance.

24. Système de freinage (100) pouvant être commandé de manière électronique selon la revendication 22 ou 23, **caractérisé en ce que** la au moins une soupape de redondance (21, 22) est une soupape de commande de pression (21) et/ou une soupape de frein de stationnement (22).

25. Système de freinage (100) pouvant être commandé de manière électronique selon l'une quelconque des revendications 22 à 24, **caractérisé en ce que** le dispositif de surveillance (140) est intégré dans le deuxième dispositif de commande (120) .

26. Véhicule (200), en particulier véhicule utilitaire (200), avec un système de freinage (100) pneumatique pouvant être commandé de manière électronique selon l'une quelconque des revendications 22 à 25, pour la mise en œuvre d'un procédé selon l'une quelconque des revendications 1 à 21, ainsi qu'un système de régulation (130) pour la commande automatisée d'actionneurs (1, 50, 51, 52, 53) du véhicule (200) par l'intermédiaire du troisième dispositif de commande (130).
